(19)

Europäisches
Patentamt
European
Patent Office
Office européen
des brevets

(11)  **EP 4 611 220 A1**

(12)  **EUROPEAN PATENT APPLICATION**
published in accordance with Art. 153(4) EPC

(43) Date of publication:
**03.09.2025  Bulletin 2025/36**

(21) Application number: **23896077.7**

(22) Date of filing: **27.07.2023**

(51) International Patent Classification (IPC):
**H02K 1/2713** (2022.01)

(52) Cooperative Patent Classification (CPC):
**H02K 1/2713; H02K 1/276; H02K 16/02**

(86) International application number:
**PCT/CN2023/109451**

(87) International publication number:
**WO 2024/113914 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **29.11.2022  CN 202211510763**

(71) Applicants:
• **Gree Electric Appliances, Inc. of Zhuhai**
  Zhuhai, Guangdong 519031 (CN)
• **Zhuhai Kaibang Motor Manufacture Co., Ltd.**
  Zhuhai, Guangdong 519110 (CN)

(72) Inventors:
• **HU, Yusheng**
  Zhuhai, Guangdong 519031 (CN)
• **CHEN, Bin**
  Zhuhai, Guangdong 519031 (CN)
• **XIAO, Yong**
  Zhuhai, Guangdong 519031 (CN)
• **LI, Xia**
  Zhuhai, Guangdong 519031 (CN)
• **SHI, Jinfei**
  Zhuhai, Guangdong 519031 (CN)

(74) Representative: **Appleyard Lees IP LLP**
**15 Clare Road**
**Halifax HX1 2HY (GB)**

(54)  **ROTOR STRUCTURE AND MOTOR**

(57)  Provided in the present disclosure are a rotor structure and a motor. The rotor structure comprises: a first rotor core; a second rotor core, a plurality of mounting grooves being provided in a circumferential direction of the second rotor core at intervals; first permanent magnets, which are axially magnetized and comprise a first polarity and a second polarity; and a plurality of second permanent magnets, comprising a third polarity and a fourth polarity, wherein the plurality of second permanent magnets are mounted in the plurality of mounting grooves in a one-to-one correspondence manner. The first permanent magnets are respectively arranged at two ends of the second rotor core in an axial direction, and the first rotor core is arranged on the side of the first permanent magnets away from the second rotor core in the axial direction. Projection is performed on one end surface of the second rotor core in the axial direction, and in a projection plane, the polarity sequence of the first permanent magnets and the second permanent magnets in an anticlockwise direction is the first polarity, the third polarity, the second polarity and the fourth polarity, wherein the first polarity and the third polarity are the same, and the second polarity and the fourth polarity are the same.

FIG. 1

## Description

CROSS-REFERENCE TO RELATED APPLICATION

The disclosure claims priority to Chinese Patent Application No. 202211510763.1, filed on November 29, 2022, the entire content of which is incorporated herein by reference.

TECHNICAL FIELD

The disclosure relates to the field of motor technology, in particular, to a rotor structure and a motor.

BACKGROUND

With the improvement of motor energy efficiency standards, higher requirements have been placed on the efficiency levels of motors. For permanent magnet motors, the efficiency and torque density of motors need to be further improved.

Among existing technical approaches to improve the efficiency and torque density of a motor, one approach is embedding permanent magnets internally to achieve greater air-gap magnetic flux density and higher magnetic flux, however, the improvement in the energy efficiency is limited due to a fixed magnetic circuit structure of the rotor. Another approach involves increasing a saliency ratio of the motor by means of a rotor structure, thereby increasing a reluctance torque of the motor to compensate for the insufficiency of the permanent magnet torque. Although this approach can achieve an efficiency comparable to the efficiency achieved by a permanent magnet motor, a relatively large rotor volume is usually required, thus causing the torque density of the motor to be inferior to that of the permanent magnet motor.

When the motor adopts an embedded permanent magnet structure, a magnetic flux leakage is easy to occur at ends of the embedded permanent magnets, thus leading to a reduction of no-load magnetic flux linkage of the motor.

SUMMARY

The objective of the disclosure is to provide a rotor structure and a motor, thus reducing magnetic flux leakage at ends of second permanent magnets and enhancing no-load magnetic flux linkage of the motor.

To realize the objective above, according to one aspect of the disclosure, a rotor structure is provided and includes:

    a first rotor core;
    a second rotor core provided with a plurality of installation slots spaced circumferentially;
    a first permanent magnet axially magnetized and including a first polarity and a second polarity; and

a plurality of second permanent magnets, including a third polarity and a fourth polarity. The plurality of second permanent magnets are installed in the plurality of installation slots in a one-to-one correspondence.

Each of two axial ends of the second rotor core is provided with one first permanent magnet, and one first rotor core is disposed on a side of each first permanent magnet away from the second rotor core in an axial direction.

A projection is thrown onto an end face of the second rotor core along the axial direction, and in a projection plane, a polarity arrangement sequence of each first permanent magnet and the plurality of second permanent magnets is the first polarity, the third polarity, the second polarity, and the fourth polarity arranged counterclockwise; the first polarity and third polarity are the same, and the second polarity and fourth polarity are the same.

In some embodiments, each first permanent magnet is divided into multiple magnetization regions along a circumferential direction, and magnetization directions of two adjacent magnetization regions are opposite to each other; in the projection plane along the axial direction, two circumferential sides of each magnetization region partially overlap with two adjacent second permanent magnets, respectively.

Magnetization directions of the two adjacent second permanent magnets are opposite; each magnetization region and the two adjacent second permanent magnets thereof form a magnetic field region; and polarities of sides of each magnetization region facing the magnetic field region are the same as polarities of sides of the two adjacent second permanent magnets facing the magnetic field region respectively.

In some embodiments, a first circumferential side of each magnetization region of each first permanent magnet covers a same polarity region of one adjacent second permanent magnets, and a second circumferential side of the corresponding magnetization region covers a same polarity region of another adjacent second permanent magnets.

In some embodiments, the projection is thrown onto the end face of the second rotor core along the axial direction, and in the projection plane, an angle of deflection between a geometric centerline of at least one pole pair of each first permanent magnet and a centerline of a corresponding rotor magnetic field of the second rotor core is less than or equal to 5°;

In some embodiments, the geometric centerline of the at least one pole pair of each first permanent magnet coincides with the centerline of the corresponding rotor magnetic field of the second rotor core.

In some embodiments, the projection is thrown onto the end face of the second rotor core along the axial direction, and in the projection plane, $\alpha$ represents an angle between lines connecting respective two end-points of a pole of each first permanent magnet located on a side adjacent to a rotor outer circle and a center of the second rotor core; $\beta$ represents an angle between lines connecting respective two end-points of a magnetic conductive portion of a pole of the second rotor core located on a side adjacent to the rotor outer circle and the center of the second rotor core; and it is satisfied that $\alpha/\beta \geq 1$.

In some embodiments, $1 \leq \alpha/\beta \leq 1.62$.

In some embodiments, the projection is thrown onto the end face of the second rotor core along the axial direction, and in the projection plane, $\alpha$ represents the angle between the lines connecting respective two end-points of the pole of each first permanent magnet located on a side adjacent to a rotor outer circle and the center of the second rotor core; and $\gamma$ represents an angle between lines connecting respective two end-points of a pole of the plurality of second permanent magnets located on a side adjacent to the rotor outer circle and the center of the second rotor core, and it is satisfied that $\alpha/\gamma > 1$.

In some embodiments, $2.0 \leq \alpha/\gamma \leq 3.2$.

In some embodiments, the projection is thrown onto the end face of the second rotor core along the axial direction, and in the projection plane, $\alpha$ represents an angle between lines connecting respective two end-points of a pole of each first permanent magnet located on a side adjacent to a rotor outer circle and a center of the second rotor core; a pole arc angle of a pole of the second rotor core is $360/2p$; and it satisfied that $360/2p/\alpha \geq 1$, where $p$ represents the number of pole pairs of the second rotor core.

In some embodiments, $1.3 \geq 360/2p/\alpha \geq 1$.

In some embodiments, the projection is thrown onto the end face of the second rotor core along the axial direction, and in the projection plane, an area of a pole of each first permanent magnet is s1, and an area of a pole of the second rotor core is s2, and it is satisfied that $s1/s2 \geq 1$.

In some embodiments, $1.05 \leq s1/s2 \leq 1.95$.

In some embodiments, the projection is thrown onto the end face of the second rotor core along the axial direction, and in the projection plane, an area of a pole of each first permanent magnet is $s1$, and an area of a pole of the plurality of second permanent magnets is $s3$; and in a section passing through a central axis of the second rotor core, an area of a pole of the first permanent magnet is $s4$, and an area of a pole of the plurality of second permanent magnets is $s5$, wherein $0.8 \times s3 \leq s1 \leq 2.4 \times s5$, and/or, $0.3 \times s3 \leq s4 \leq 0.8 \times s5$.

In some embodiments, the projection is thrown onto the end face of the second rotor core along the axial direction, and in the projection plane, an area of a pole of each first permanent magnet is $s1$, and a length of a line connecting a central axis of the second rotor core and any point on an outer circle is $j$, and it is satisfied

$$1 \leq \frac{s1}{max(j)} \leq 20 \,.$$

In some embodiments, $3 \leq s1/max(j) \leq 16$.

In some embodiments, the projection is thrown onto the end face of the second rotor core along the axial direction, and in the projection plane, an area of a pole of each first permanent magnet is $s1$, and an area of a pole of the second rotor core is $s2$, and an area of a pole of the plurality of second permanent magnets is $s3$, and it is satisfied that $0.2 \leq s2/(s1 + s3) \leq 1$.

In some embodiments, $0.3 \leq s2/(s1 + s3) \leq 0.6$.

In some embodiments, the projection is thrown onto the end face of the second rotor core along the axial direction, and in the projection plane, an area of a pole of each first permanent magnet is s1, and a thickness of each first permanent magnet along the axial direction of the second rotor core is $b$, and $s1$ is negatively correlated with $b$.

In some embodiments, a relationship between s1 and b satisfies a dimensionless formula $s1 = -A \times b + C$, wherein $A$ is in a range from 5 to 20, and $C$ is in a range from 120 to 400.

In some embodiments, the projection is thrown onto the end face of the second rotor core along the axial direction, and in the projection plane, a sum of angles, each of which is formed between lines connecting a center of the second rotor core and two end-points of each pole of each first permanent magnet located on its side adjacent to a rotor outer circle respectively, is $\alpha \times 2q$, and a ratio of the sum of the angles to an angle in a circular segment of the second rotor core is a, and $a = \alpha \times 2q/360$; a thickness of each first permanent magnet along the axial direction of the second rotor core is $b$, , and it is satisfied that $2 \leq b/a \leq 6$, where $q$ represents the number of pole pairs of the first permanent magnet.

In some embodiments, the projection is thrown onto the end face of the second rotor core along the axial direction, and in the projection plane, a sum of angles, each of which is formed between lines connecting a center of the second rotor core and two end-points of each pole of each first permanent magnet located on its side adjacent to a rotor outer circle respectively, is $\alpha \times 2q$, and a ratio of the sum of the angles to an angle in a circular segment of the second rotor core is a, and $a = \alpha \times 2q/360$; a thickness of each first permanent magnet along the axial direction of the second rotor core is $b$, and it is satisfied that $1.7 \leq a \times b \leq 12$, wherein $q$ represents the number of pole pairs of each first permanent magnet.

In some embodiments, $2 \leq a \times b \leq 10$.

In some embodiments, a thickness of each first permanent magnet along the axial direction is $b$, and a thickness of each second permanent magnet along a magnetization direction thereof is $m$, and it is satisfied that $0.2 \leq b/m \leq 2$.

In some embodiments, $0.4 \leq b/m \leq 1.4$.

In some embodiments, a thickness of each first permanent magnet along the axial direction is $b$, and a thickness of the first rotor core along the axial direction of the second rotor core is $c$, wherein a value of $c$ is not less than an axial thickness of a single core lamination of the second rotor core, and it is satisfied that $0.1 \leq c/b \leq 1$.

In some embodiments, a flux barrier slot is disposed on a side of each installation slot adjacent to a central axis of the second rotor core; the projection is thrown onto the end face of the second rotor core along the axial direction of the second rotor core, and in the projection plane, each first permanent magnet is adapted to allow a projection thereof to cover part of a projection of the corresponding flux barrier slot.

In some embodiments, an area of the projection of the corresponding flux barrier slot covered by the projection of each first permanent magnet is less than or equal to 75% of a total projection area of the corresponding flux barrier slot.

In some embodiments, the area of the projection of the corresponding flux barrier slot covered by the projection of each first permanent magnet is less than or equal to 25% of the total projection area of the corresponding flux barrier slot.

In some embodiments, the projection is thrown onto the end face of the second rotor core along the axial direction, and in the projection plane, $max(i)$ denotes the maximum length of a line connecting a central axis of the second rotor core and a midpoint of an end-edge of a pole of each first permanent magnet located on a side adjacent to a rotor outer circle, and the maximum length of a line connecting the central axis of the second rotor core and any point on the rotor outer circle of the second rotor core is $max(j)$, and it is satisfied that $max(i) \leq max(j)$.

In some embodiments, the projection is thrown onto the end face of the second rotor core along the axial direction, and in the projection plane, $ii$ denotes a length of a line connecting the central axis of the second rotor core and a midpoint of an end-edge of a pole of each second permanent magnet located on a side adjacent to the rotor outer circle, and it is satisfied that $max(j) \geq max(i) \geq 0.8 \times ii$.

In some embodiments, $max(j) \geq max(i) \geq 0.95 \times ii$.

In some embodiments, the projection is thrown onto the end face of the second rotor core along the axial direction, and in the projection plane, $d$ denotes a length of a line connecting a central axis of the second rotor core and a midpoint of a radial inner edge of a pole of each first permanent magnet, and $i$ denotes a length of a line connecting a central axis of the second rotor core and a midpoint of an end-edge of a pole of each first permanent magnet located on a side adjacent to a rotor outer circle, and it is satisfied that $0.2 \leq d/max(i) \leq 0.8$.

In some embodiments, $0.3 \leq d/max(i) \leq 0.6$.

In some embodiments, the projection is thrown onto the end face of the second rotor core along the axial direction, and in the projection plane, $d$ denotes a length of a line connecting a central axis of the second rotor core and a midpoint of a radial inner edge of a pole of each first permanent magnet, and $f$ denotes a length of a line connecting the central axis of the second rotor core and a midpoint of a radial inner edge of a pole of the second permanent magnet, and it is satisfied that $0 \leq d/f \leq 2$.

In some embodiments, $0.8 \leq d/f \leq 1.6$.

In some embodiments, the projection is thrown onto the end face of the second rotor core along the axial direction, and in the projection plane, $i$ denotes a length of a line connecting a central axis of the second rotor core and a midpoint of an end-edge of a pole of each first permanent magnet located on a side adjacent to a rotor outer circle, and $j$ denotes a length of a line connecting the central axis of the second rotor core and any point on the rotor outer circle of the second rotor core, and $h$ denotes a length of a line connecting the central axis of the second rotor core and any point on a rotor outer circle of the first rotor core, and it is satisfied that $max(h) \leq max(j)$, and/or, $min(h) \geq 0.8 \times max(i)$.

In some embodiments, $0.9 \leq min(h)/max(i) \leq 1.4$.

In some embodiments, the projection is thrown onto the end face of the second rotor core along the axial direction, and in the projection plane, $d$ denotes a length of a line connecting a central axis of the second rotor core and a midpoint of a radial inner edge of a pole of each first permanent magnet, and $k$ denotes a length of a line connecting the central axis of the second rotor core and any point on a radial inner edge of the first rotor core, and it is satisfied that $max(k) \leq d$.

In some embodiments, $0.2 \leq max(k)/d \leq 1$.

In some embodiments, the projection is thrown onto the end face of the second rotor core along the axial direction, and in the projection plane, $min(e)$ denotes the minimum radial width $e$ of each first permanent magnet, and $max(g)$ denotes the maximum radial width $g$ of each second permanent magnet, and it is satisfied that $0.5 \leq min(e)/max(g) \leq 2$.

In some embodiments, $0.6 \leq min(e)/max(g) \leq 1.6$.

In some embodiments, the projection is thrown onto the end face of the second rotor core along the axial direction, and in the projection plane, $max(e)$ denotes the maximum radial width e of each first permanent magnet, and $max(o)$ denotes the maximum radial width o of the second rotor core, and it is satisfied that $max(e) \leq max(o)$.

In some embodiments, $0.3 \leq max(e)/min(o) \leq 1$, and/or, $0.4 \leq max(e)/max(o) \leq 0.95$.

In some embodiments, the projection is thrown onto the end face of the second rotor core along the axial direction, and in the projection plane, $max(e)$ denotes the maximum radial width $e$ of each first permanent magnet, and $min(l)$ denotes the minimum radial width $l$ of the first rotor core, and it is satisfied that $0.7 \leq min(l)/max(e) \leq 3$.

In some embodiments, $1 \leq min(l)/max(e) \leq 2$.

In some embodiments, the projection is thrown onto the end face of the second rotor core along the axial direction, and in the projection plane, and an area of a pole of each first permanent magnet is $s1$, and an axial height of the second rotor core along a central axis thereof is $x$, wherein $s1$ is negatively correlated with $x$.

In some embodiments, $s1 = -B \times x + D$, wherein $B$ is in a range from 25 mm to 100, and $D$ is in a range from 400 to 1600.

In some embodiments, a thickness of the first rotor core along an axial direction of the second rotor core is $c$, and a thickness of each second permanent magnet along a magnetization direction thereof is $m$, and it is satisfied that $0.1 \times m \leq c \leq m$.

In some embodiments, $0.1 \times m \leq c \leq 0.5 \times m$.

According to another aspect of the disclosure, a motor is provided and includes a stator structure and the rotor structure above. The stator structure is sleeved around the rotor structure.

In some embodiments, the stator structure includes a stator core, and an outer diameter of each first permanent magnet disposed at at least one end of the second rotor core is less than an inner diameter of the stator core.

In some embodiments, an outer diameter of each first permanent magnet disposed at at least one end of the second rotor core is less than a larger one of an outer diameter of the first rotor core and an outer diameter of the second rotor core.

In some embodiments, an air gap is formed between the stator structure and the rotor structure, $w$ represents a difference between the maximum outer diameter of the second rotor core and the maximum outer diameter of the first permanent magnet of the rotor structure, and it is satisfied that $w \geq 0$.

In some embodiments, a thickness of the air gap is $\delta$, and it is satisfied that $0.5 \times min(\delta) \leq w \leq 14 \times min(\delta)$.

In some embodiments, the stator structure includes a stator core; $x$ represents an axial height of the second rotor core along the axial direction of the motor, and $y$ represents an axial height of the stator core along the axial direction of the motor, and it is satisfied that $x/y \leq 2$.

In some embodiments, $0.5 \leq x/y \leq 1.5$.

In some embodiments, the stator structure includes a stator core; $z$ represents a total axial height of the rotor structure of the motor, and $y$ represents an axial height of the stator core along the axial direction of the motor, and it is satisfied that $z/y \leq 4$.

In some embodiments, $1.0 \leq z/y \leq 3.0$.

In some embodiments, the stator structure includes a stator core; $x$ represents an axial height of the second rotor core along the axial direction of the motor, and $y$ represents an axial height of the stator core along the axial direction of the motor, and $b$ represents an axial height of each first permanent magnet along the axial direction of the motor, and it is satisfied that $0.01x \leq b \leq 0.7x$, and/or, $0.015y \leq b \leq 0.9y$.

In some embodiments, the motor includes a cover plate and a rotary shaft; at least one end of the rotary shaft is provided with one cover plate; and the minimum diameter of an outer circle of the cover plate is greater than an inner diameter of the stator core; and in the axial direction, a distance between the cover plate and the stator core is $E$, and it is satisfied that $1.2y \leq E \leq 2.3y$.

In the solution of the disclosure, a rotor structure is provided and includes: a first rotor core; a second rotor core provided with a plurality of installation slots spaced circumferentially; a first permanent magnet axially magnetized and including a first polarity and a second polarity; and a plurality of second permanent magnets, including a third polarity and a fourth polarity. The plurality of second permanent magnets are installed in the plurality of installation slots in a one-to-one correspondence. Each of two axial ends of the second rotor core is provided with one first permanent magnet, and one first rotor core is disposed on a side of each first permanent magnet away from the second rotor core in an axial direction. A projection is thrown onto an end face of the second rotor core along the axial direction, and in a projection plane, a polarity arrangement sequence of each first permanent magnet and the plurality of second permanent magnets is the first polarity, the third polarity, the second polarity, and the fourth polarity arranged counterclockwise; the first polarity and third polarity are the same, and the second polarity and fourth polarity are the same.

In the rotor structure, the polarity arrangement sequence of the first permanent magnet and the plurality of second permanent magnets is the first polarity, the third polarity, the second polarity, and the fourth polarity arranged counterclockwise, and the first polarity and third polarity are the same, and the second polarity and fourth polarity are the same. The magnetic field lines of the first polarity and the second polarity of the first permanent magnet enter the second rotor core along the axial direction, while the magnetic field lines of the third polarity and the fourth polarity of the second permanent magnets enter the second rotor core along a tangential or a radial direction. These two groups of magnetic field lines of two directions are mutually squeezed in the second rotor core, so that two groups of magnetic field lines can and only enter the air gap, thereby increasing an airgap magnetic flux density, which can effectively reduce magnetic flux leakage at two ends of the second permanent magnets, thus enhancing no-load magnetic flux linkage.

BRIEF DESCRIPTION OF THE DRAWINGS

The accompanying drawings, which constitute part of this application, are provided to further illustrate the disclosure. The illustrative embodiments of the disclosure and the description thereof are intended to explain the disclosure but not intended to constitute improper limitations on the disclosure. In the drawings:

FIG. 1 shows a three-dimensional structural view of a rotor structure according to an embodiment of the disclosure;

FIG. 2 shows an exploded structural view of the rotor structure according to an embodiment of the disclosure;

FIG. 3 shows a sectional structural view of the rotor structure according to an embodiment of the disclosure;

FIG. 4 is a view showing a structural layout of the rotor structure according to an embodiment of the disclosure;

FIG. 5 shows a cross-sectional structural view of the rotor structure according to an embodiment of the disclosure;

FIG. 6 is a structural view showing dimensions of the rotor structure according to an embodiment of the disclosure;

FIG. 7 is a structural view showing other dimensions of the rotor structure according to an embodiment of the disclosure;

FIG. 8 is a structural view showing still other dimensions of the rotor structure according to an embodiment of the disclosure;

FIG. 9 is a structural view showing still other dimensions of the rotor structure according to an embodiment of the disclosure;

FIG. 10 shows a three-dimensional structural view of the rotor structure according to another embodiment of the disclosure;

FIG. 11 is a view showing a relationship between polarity arrangement and no-load magnetic flux linkage of the rotor structure according to an embodiment of the disclosure;

FIG. 12 is view showing a relationship between angle deflection between a geometric centerline of a first permanent magnet and a magnetic field centerline and no-load magnetic flux linkage according to an embodiment of the rotor structure of the disclosure;

FIG. 13 is a view showing relationships between $\alpha/\beta$ and respective utilization rates of permanent magnets according to an embodiment of the rotor structure of the disclosure;

FIG. 14 is a view showing relationships between $\alpha/\gamma$ and utilization rate of a permanent magnet and magnetic flux leakage coefficient of a permanent magnet according to an embodiment of the rotor structure of the disclosure;

FIG. 15 is a view showing relationships between $360/2p/\alpha$ and space utilization rate and saturation coefficient according to an embodiment of the rotor structure of the disclosure;

FIG. 16 is a view showing relationships between $b$/a and utilization rate and demagnetization rate of a permanent magnet according to an embodiment of the rotor structure of the disclosure;

FIG. 17 is a view showing relationships between $s1/s2$ and respective utilization rates of permanent magnets according to an embodiment of the rotor structure of the disclosure;

FIG. 18 is a view showing relationships between $b/m$ and respective demagnetization rates of permanent magnets according to an embodiment of the rotor structure of the disclosure;

FIG. 19 is a view showing relationships between $c/m$

and utilization rate of no-load magnetic flux linkage and core loss according to an embodiment the rotor structure of the disclosure;

FIG. 20 shows a comparison view of magnetic flux leakage coefficients between a motor of an embodiment of the disclosure and a motor in the prior art;

FIG. 21 shows a comparison view of air-gap magnetic flux density waveforms between the motor of an embodiment of the disclosure and a motor in the prior art;

FIG. 22 shows a comparison view of air-gap magnetic flux density amplitudes between the motor of an embodiment of the disclosure and a motor in the prior art;

FIG. 23 shows a comparison view of no-load magnetic flux linkages between the motor of an embodiment of the disclosure and a motor in the prior art;

FIG. 24 shows a comparison view of output torque-current curves between the motor of an embodiment of the disclosure and a motor in the prior art;

FIG. 25 shows a comparison view of output torques under the same current between the motor of an embodiment of the disclosure and a motor in the prior art;

FIG. 26 shows a comparison view of efficiency curves between the motor of an embodiment of the disclosure and a motor in the prior art;

FIG. 27 shows a comparison view of copper loss curves between the motor of an embodiment of the disclosure and a motor in the prior art;

FIG. 28 shows a comparison view of core losses between the motor of an embodiment of the disclosure and a motor in the prior art;

FIG. 29 is a view showing a relationship between $s1/s3$ and no-load magnetic flux linkage according to an embodiment of the rotor structure of the disclosure;

FIG. 30 is a view showing a relationship between $s1/s5$ and utilization rate of no-load magnetic flux linkage according to an embodiment of the rotor structure of the disclosure;

FIG. 31 is a view showing a relationship between $s4/s3$ and respective demagnetization rates of permanent magnets according to an embodiment of the rotor structure of the disclosure;

FIG. 32 is a view showing a relationship between $s4/s5$ and saturation coefficient of the motor according to an embodiment of the rotor structure of the disclosure;

FIG. 33 is a view showing a relationship between $s1/max(j)$ and flux concentration effect coefficient according to an embodiment of the rotor structure of the disclosure;

FIG. 34 is a view showing relationships between $s2/(s1 + s3)$ and utilization rate of a rotor core and core loss according to an embodiment of the rotor structure of the disclosure;

FIG. 35 is a view showing relationship curves between b and core loss and copper loss under one s1 according to an embodiment of the rotor structure of the disclosure;

FIG. 36 is a view showing relationship curves between a × b and air-gap magnetic flux density and utilization rate of the first permanent magnet according to an embodiment of the rotor structure of the disclosure;

FIG. 37 is a view showing relationship curves between c/b and saturation coefficient and utilization rate of a rotor core according to an embodiment of the rotor structure of the disclosure;

FIG. 38 shows a schematic structural view of the rotor structure according to an embodiment of the rotor structure of the disclosure;

FIG. 39 shows a schematic structural view of the first permanent magnet according to an embodiment of the rotor structure of the disclosure;

FIG. 40 shows a schematic structural view of a second rotor core according to an embodiment of the rotor structure of the disclosure;

FIG. 41 shows a schematic structural view of the motor according to an embodiment of the disclosure;

FIG. 42 is a view showing relationships between ratio of an area covered by the first permanent magnet to an area of a flux barrier slot and no-load magnetic flux linkage and utilization rate of a permanent magnet according to an embodiment of the rotor structure of the disclosure;

FIG. 43 is a structural view showing dimensions of the rotor structure according to an embodiment of the disclosure;

FIG. 44 is a view showing a relationship between $max(i)/ii$ and magnetic flux leakage coefficient of the top of a second permanent magnet according to an embodiment of the rotor structure of the disclosure;

FIG. 45 is a view showing relationships between $d/f$ and magnetic flux leakage coefficient of the bottom of the second permanent magnet and utilization rate of the first permanent magnet according to an embodiment of the rotor structure of the disclosure;

FIG. 46 is a structural view showing other dimensions of the rotor structure according to an embodiment of the disclosure;

FIG. 47 is a view showing a relationship between $min(h)/max(i)$ and no-load magnetic flux linkage according to an embodiment of the rotor structure of the disclosure;

FIG. 48 is a view showing a relationship between $max(k)/d$ and no-load magnetic flux linkage according to an embodiment of the rotor structure of the disclosure;

FIG. 49 is a view showing a relationship between $min(e)/max(g)$ and magnetic flux leakage coefficient according to an embodiment of the rotor structure of the disclosure;

FIG. 50 is a view showing relationships between $max(e)/min(o)$ and max(e)/max(o) and saturation coefficient of the second rotor core according to an embodiment of the rotor structure of the disclosure;

FIG. 51 is a view showing a relationship between $min(l)/max(e)$ and saturation coefficient of a first rotor core according to an embodiment of the rotor structure of the disclosure;

FIG. 52 is a view showing relationships between $x/y$ and utilization rate of the second rotor core and utilization rate of stator magnetic field according to an embodiment of the rotor structure of the disclosure;

FIG. 53 is a view showing relationships between s1 and core loss and copper loss under one x according to an embodiment of the rotor structure of the disclosure;

FIG. 54 is a view showing a relationship between $z/y$ and utilization rate of a stator core according to an embodiment of the rotor structure of the disclosure;

FIG. 55 is a view showing relationships between $b/x$ and $b/y$ and saturation coefficient of the second rotor core according to an embodiment of the rotor structure of the disclosure; and

FIG. 56 shows a sectional structural view along A-A in FIG. 38.

The above drawings include following reference numerals:

1. first rotor core; 2. second rotor core; 3. first permanent magnet; 4. second permanent magnet; 5. first polarity; 6. second polarity; 7. third polarity; 8. fourth polarity; 9. cover plate; 10. rotary shaft; 11. flux barrier slot; 12. stator core.

DETAILED DESCRIPTION OF THE EMBODIMENTS

It should be noted that embodiments and features of the embodiments in the application may be combined with each other if there is no conflict. The disclosure will be described in detail below with reference to the accompanying drawings and embodiments.

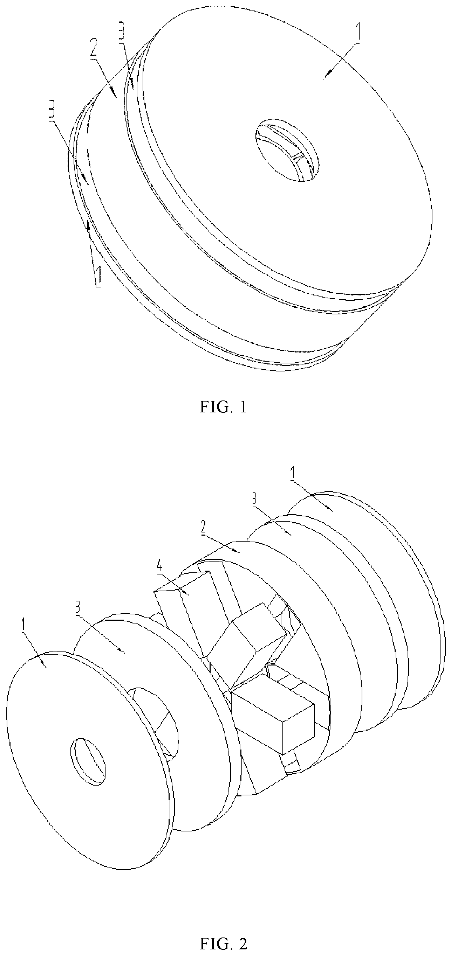

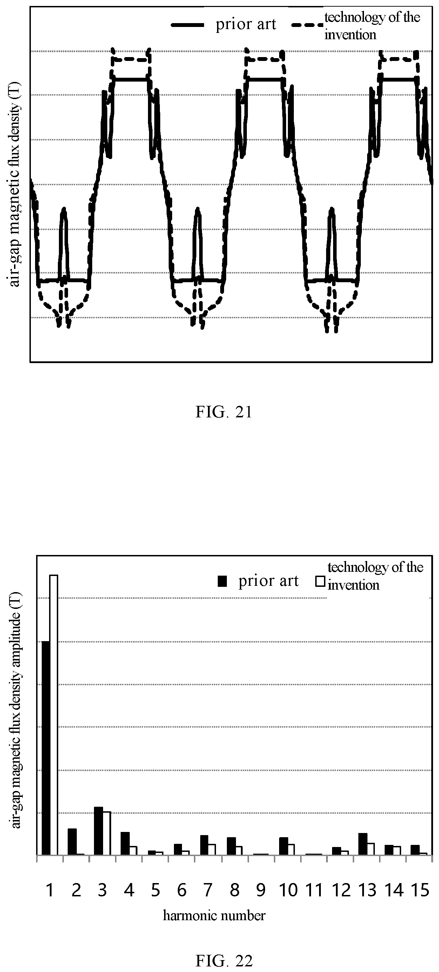

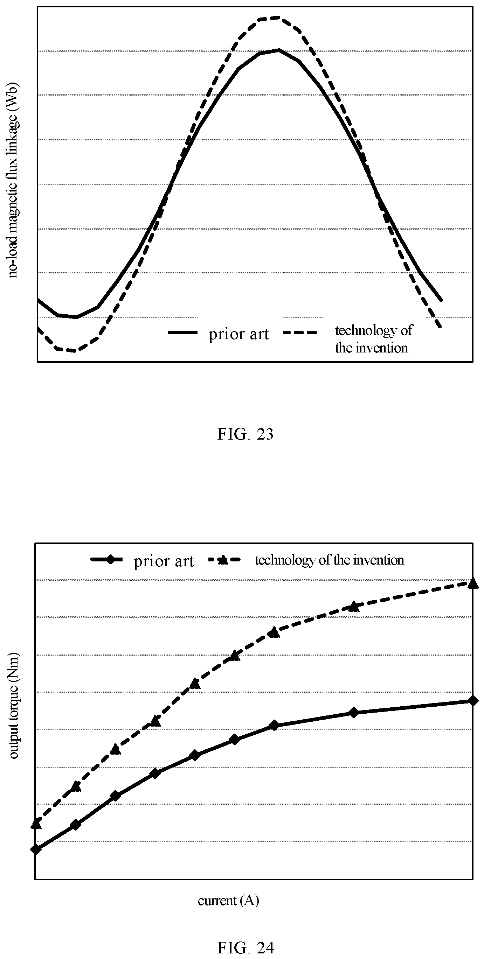

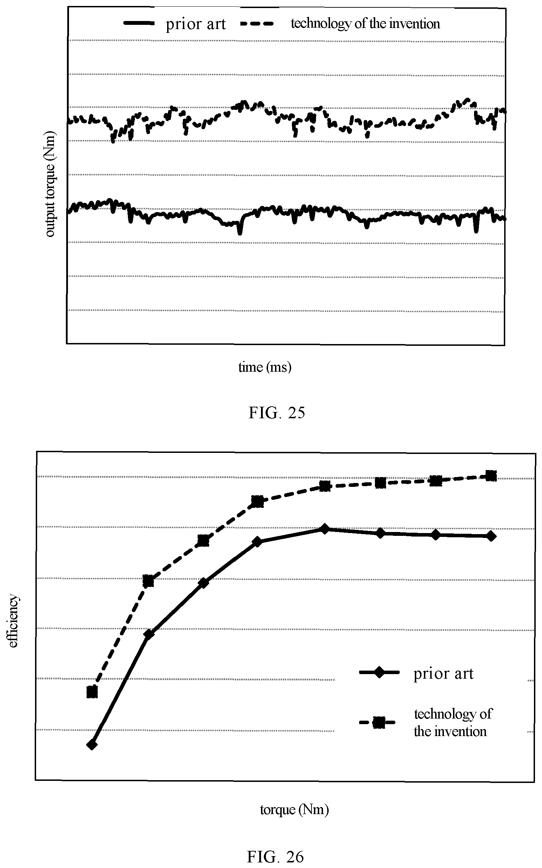

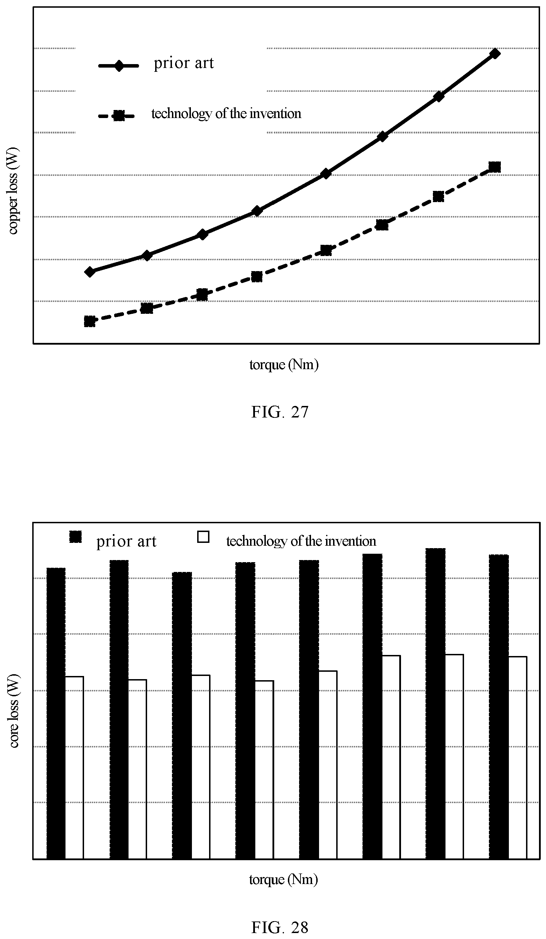

As shown in FIGS. 1 to 56, according to an embodiment of the disclosure, a rotor structure includes a first rotor core 1, a second rotor core 2, a first permanent magnet 3, and a plurality of second permanent magnets 4. The second rotor core 2 is provided with a plurality of installation slots spaced circumferentially. The first permanent magnet 3 is axially magnetized, and includes a first polarity 5 and a second polarity 6. The plurality of second permanent magnets 4 includes a third polarity 7 and a fourth polarity 8. The plurality of second permanent magnets 4 are installed in the plurality of installation slots in a one-to-one correspondence. Each of two axial ends of the second rotor core 2 is provided with one first permanent magnet 3, and one first rotor core 1 is disposed on a side of each first permanent magnet 3 away from the second rotor core 2 in the axial direction. A projection is thrown onto an end face of the second rotor core 2 along the axial direction of the second rotor core 2,

and in the projection plane, a polarity arrangement sequence of the first permanent magnet 3 and the plurality of second permanent magnets 4 is the first polarity 5, the third polarity 7, the second polarity 6, and the fourth polarity 8 arranged counterclockwise, and the first polarity 5 and third polarity 7 are the same, and the second polarity 6 and fourth polarity 8 are the same.

The projection plane is perpendicular to the central axis of the second rotor core 2, and the first rotor core 1, the second rotor core 2, the first permanent magnet 3, and the plurality of second permanent magnets 4 are all projected onto this projection plane, thus unifying these structures in a single plane to make it easier to describe the structures and define dimensional relationship thereof.

By arranging both the first permanent magnet 3 and the second permanent magnets 4 in the rotor structure, the first permanent magnet 3 and the second permanent magnets 4 can jointly provide magnetic field lines for the motor, thus increasing a motor's output.

In the rotor structure, the polarity arrangement sequence of the first permanent magnet 3 and the plurality of second permanent magnets 4 is the first polarity 5, the third polarity 7, the second polarity 6, and the fourth polarity 8 arranged counterclockwise, and the first polarity 5 and third polarity 7 are the same, and the second polarity 6 and fourth polarity 8 are the same. The magnetic field lines of the first polarity 5 and the second polarity 6 of the first permanent magnet 3 enter the second rotor core 2 along the axial direction, while the magnetic field lines of the third polarity 7 and the fourth polarity 8 of the second permanent magnets 4 enter the second rotor core 2 along a tangential or a radial direction. These two groups of magnetic field lines of two directions are mutually squeezed in the second rotor core 2, so that two groups of magnetic field lines can and only enter the air gap, thereby increasing an air-gap magnetic flux density, which can effectively reduce magnetic flux leakage at two ends of the second permanent magnets, thus enhancing no-load magnetic flux linkage, effectively enhancing the motor efficiency and a torque density, and increasing the motor's output.

In some embodiments, the polarity arrangement of the permanent magnets of the rotor structure is explained by taking tangentially magnetized second permanent magnets 4 as an example.

In the above embodiments, a polarity of the first permanent magnet 3 refers to the polarity of an end of the first permanent magnet 3 facing the second rotor core 2, and the first polarity 5 and the second polarity 6 are opposite. For example, when the first polarity 5 is the N pole, the second polarity 6 is the S pole. The polarity of each second permanent magnet 4 refers to the polarity of a side of each second permanent magnet 4 facing the second rotor core 2. The polarity distribution of the second permanent magnets 4 are configured as the third polarity 7 of the second permanent magnets 4 facing the second rotor core 2 corresponding to the first polarity 5 of the first permanent magnet 3, and the fourth polarity 8 of the second permanent magnets 4 facing the second rotor core 2 corresponds to the second polarity 6 of the first permanent magnet 3. The third polarity 7 of the second permanent magnets 4 is the same as the first polarity 5 of the first permanent magnet 3. When the first polarity 5 is the N pole, the third polarity 7 is also the N pole. The fourth polarity 8 of the second permanent magnets 4 is the same as the second polarity 6 of the first permanent magnet 3. When the second polarity 6 is the S pole, the fourth polarity 8 is also the S pole.

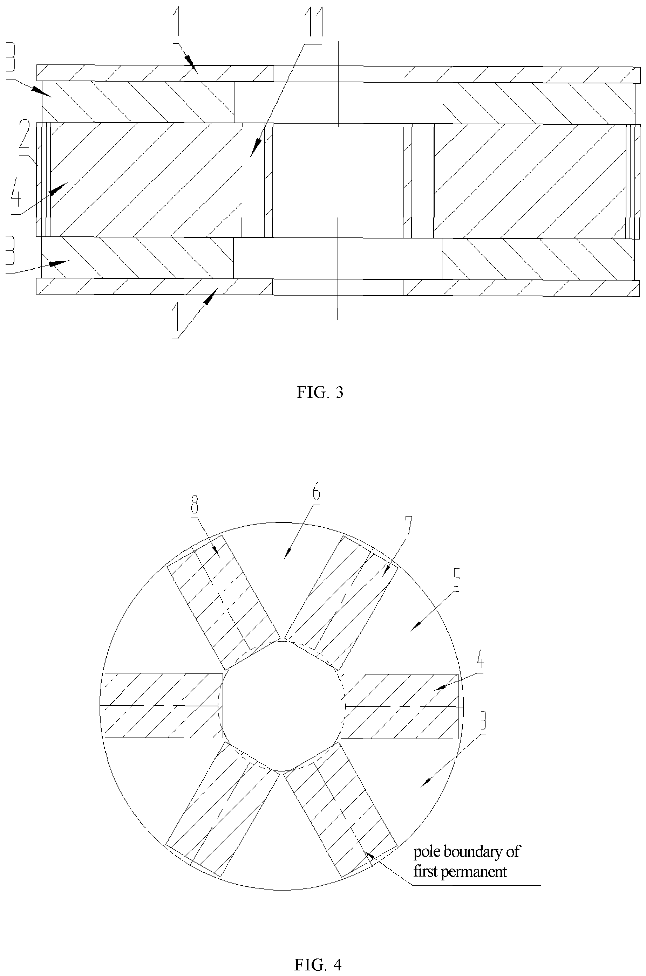

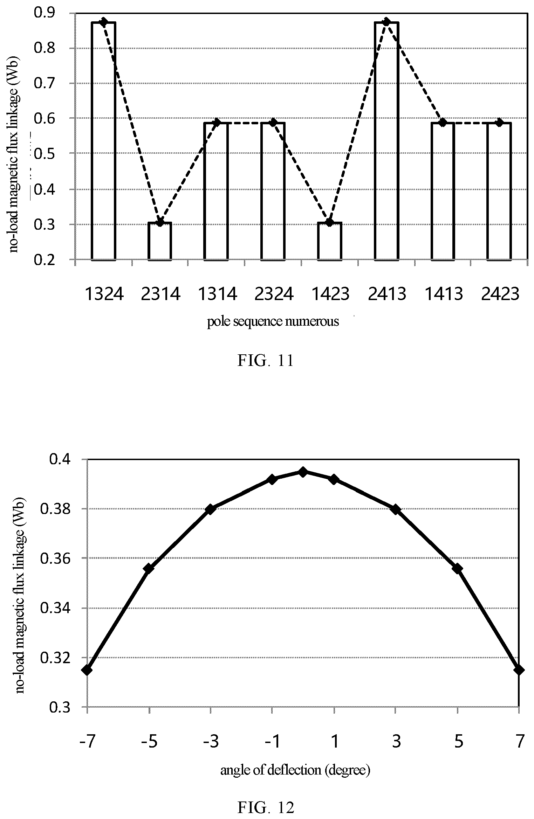

As shown in FIGS. 4 and 11, these views show no-load magnetic flux linkages of motors using different polarity combinations. The number "1" represents the first polarity 5, the number "2" represents the second polarity 6, the number "3" represents the third polarity 7, and the number "4" represents the fourth polarity 8, and there are eight combinations as follows: 1324, 2314, 1314, 2324, 1423, 2413, 1413, and 2423. The no-load magnetic flux linkages corresponding to the sequences 1324 and 2413 are the maximum, while the no-load magnetic flux linkages corresponding to the sequences 2314 and 1423 are the minimum.

As shown in FIG. 11, the polarity arrangement sequence of the rotor structure is the first polarity 5, the third polarity 7, the second polarity 6, and the fourth polarity 8 arranged counterclockwise, thus forming a combination 1324 or 2413. In this case, the magnetic field lines on two end faces of the second rotor core 2 have a squeezing effect, maximizing the no-load magnetic flux linkage. If the opposition of the first polarity 5 and the second polarity 6 in the axial direction is disregarded and the polarity sequence is the first polarity 5, the third polarity 7, the first polarity 5, and the fourth polarity 8, or is the second polarity 6, the third polarity 7, the second polarity 6, and the fourth polarity 8, magnetic field lines on one end face of the second rotor core 2 have a squeezing effect, while magnetic field lines on the other end face thereof have a divergence effect, thus reducing the no-load magnetic flux linkage by 32.8%. When the polarity sequence is the second polarity 6, the third polarity 7, the first polarity 5, the fourth polarity 8, the magnetic field lines on two end faces of the second rotor core 2 both have a divergence effect, thus significantly reducing the no-load magnetic flux linkage by 65.2%.

In some embodiments, the first permanent magnet 3 is divided into multiple magnetization regions along a circumferential direction, and magnetization directions of two adjacent magnetization regions are opposite to each other. A projection is thrown onto an end face of the second rotor core 2 along the axial direction of the second rotor core 2, in the projection plane, two circumferential sides of each magnetization region partially overlap with two adjacent second permanent magnets 4, respectively. The magnetization directions of two adjacent second permanent magnets 4 are opposite. Each magnetization region and two adjacent second permanent magnets 4 thereof form a magnetic field region, and the polarities of sides of the magnetization region facing the magnetic field region are the same as the polarities of sides of the two adjacent second permanent magnets 4 facing the magnetic field region respectively.

In an embodiment, among the multiple magnetization regions of the first permanent magnets 3 located at two ends of the second rotor core 2, for the same magnetic field region, sides of the two magnetization regions facing the magnetic field region have the same polarity. For the two second permanent magnets 4 at the circumferential sides of the magnetic field region, sides of the two second permanent magnets 4 facing the magnetic field region have the same polarity, and the same polarity is the same as the polarities of sides of the magnetization region facing the magnetic field region, thus enabling the magnetic field lines at the two ends of the second rotor core 2 squeeze toward the magnetic field region located in the middle, thus making the squeezing effect of the magnetic field lines in the magnetic field region more prominent, thereby maximizing the no-load magnetic flux linkage, effectively enhancing the magnetic field strength of the motor, and improving the motor's output.

In some embodiments, the second permanent magnets 4 each are bar-shaped and arranged radially along the second rotor core 2. The second permanent magnets 4 each are configured in a shape of a bar and arranged radially along the second rotor core 2 so that the second rotor core 2 may be divided into multiple sector-shaped regions along the circumferential direction, thereby allowing shapes of the magnetic field regions formed by the second rotor core 2 to better match with the shapes of the magnetization regions of the first permanent magnet 3. The second permanent magnets 4 form the two side-walls of the magnetic field region, so that structural match between the magnetic field region and each permanent magnet is better, and the distribution and directions of the magnetic field lines are more rational, thereby enabling the magnetic field lines to be more fully used to form a magnetic field, resulting in higher magnetic field strength and greater motor capability.

The second permanent magnets 4 each may also have any other structural form, such as a V-shape structure.

In some embodiments, a first circumferential side of each magnetization region of the first permanent magnet 3 covers the same polarity region of one adjacent second permanent magnet 4, and a second circumferential side of the magnetization region covers the same polarity region of another adjacent second permanent magnet 4.

In some embodiments, the magnetization regions of the first permanent magnet 3 may be spaced apart, that is, magnetization regions of the first permanent magnet 3 are not contiguous, and there is a non-magnetized region therebetween. By configuring a non-magnetized region between adjacent magnetization regions, the proportions of the magnetization area and the non-magnetized area of the first permanent magnet can be adjusted by adjusting the area of the non-magnetized regions, thus reducing a saturation level of the motor, improving a utilization rate of the no-load magnetic flux linkage of the motor, helping to reduce losses, and further lowering the magnetization difficulty of the first permanent magnet, and reducing the cost of the permanent magnet.

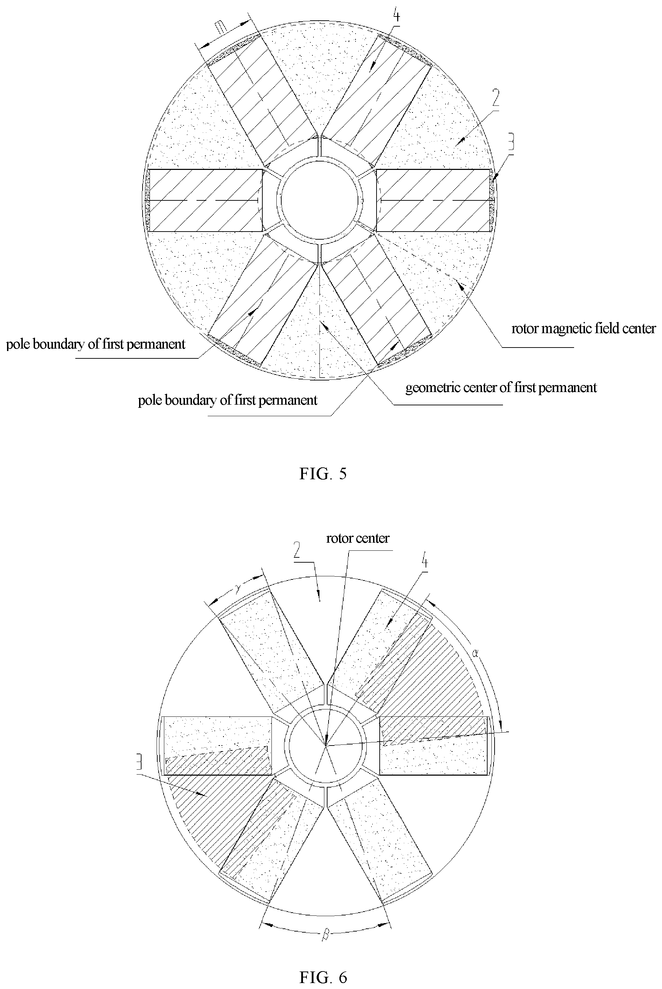

As shown in FIG. 5, in some embodiments, the projection is thrown onto the end face of the second rotor core 2 along the axial direction of the second rotor core 2, and an angle of deflection between a geometric centerline of at least one pole pair of the first permanent magnet 3 and a centerline of a corresponding rotor magnetic field of the second rotor core 2 is less than or equal to 5°.

In some embodiments, the geometric centerline of at least one pole pair of the first permanent magnet 3 coincides with the centerline of the corresponding rotor magnetic field of the second rotor core 2. By defining a geometric position of at least part of the poles of the first permanent magnet 3, magnetic flux leakage caused by the divergence of the rotor magnetic field toward rotor end faces may be reduced. In an embodiment, the geometric centerline of each magnetization region of the first permanent magnet 3 is a centerline between two side edges of the corresponding magnetization region.

The center of the magnetic field in the second rotor core 2 generated by the second permanent magnet 4 is a rotor magnetic field center, where the magnetic field in the second rotor core 2 is the strongest. A center of the magnetic field of each magnetization region of the first permanent magnet 3 is a geometric center of the corresponding magnetization region. If the angle of deflection between centerlines of the two magnetic fields is too large, the mutual squeezing effect of the two groups of magnetic field lines weakens, and the magnetic field of the second permanent magnets 4 divergences at the ends thereof by taking the first permanent magnet 3 as a path, thus increasing magnetic flux leakage. When the centerlines of the two magnetic field are aligned, the squeezing effect of the two groups of magnetic field lines is optimal, and the magnetic flux leakage is minimized.

Experimental verification shows that, when the angle of deflection between the geometric centerline of the magnetization region of the first permanent magnet 3 and the centerline of the corresponding rotor magnetic field is 5°, compared with those when the angle of deflection is 0°, the no-load magnetic flux linkage is reduced by 10%, the current increases by 10.5%, and the copper loss increases by 21%. If the angle of deflection further increases, the current and the copper loss will rise even more. FIG. 12 shows a curve of no-load magnetic flux linkage varying with angle of deflection. When the angle of deflection is greater than 5°, the no-load magnetic flux linkage drops fast, which means that magnetic flux leakage increases even more.

As shown in FIG. 6, in some embodiments, the projection is thrown onto the end face of the second rotor core 2 along the axial direction of the second rotor core 2, and in the projection plane, $\alpha$ represents an angle between lines, which connect respective two end-points of a pole of the first permanent magnet 3 located on its side adjacent to the rotor outer circle and the center of the second rotor core 2 respectively; and $\beta$ represents an angle between lines, which connect respective two end-points of a magnetic conductive portion of a pole of the second rotor core 2 located on its side adjacent to the rotor outer circle and the center of the second rotor core 2 respectively; and it is satisfied that $\alpha/\beta \geq 1$. In some embodiments, $1 < \alpha/\beta \leq 1.62$.

The magnetic field lines of the first permanent magnet 3 pass through the second rotor core 2 and enter an air gap to interact with a stator magnetic field to generate a torque. By defining the relationship between $\alpha$ and $\beta$, the magnetic flux leakage at the ends of the second permanent magnets 4 can be reduced, thereby improving the utilization rates of the first permanent magnet 3 and the second permanent magnets 4.

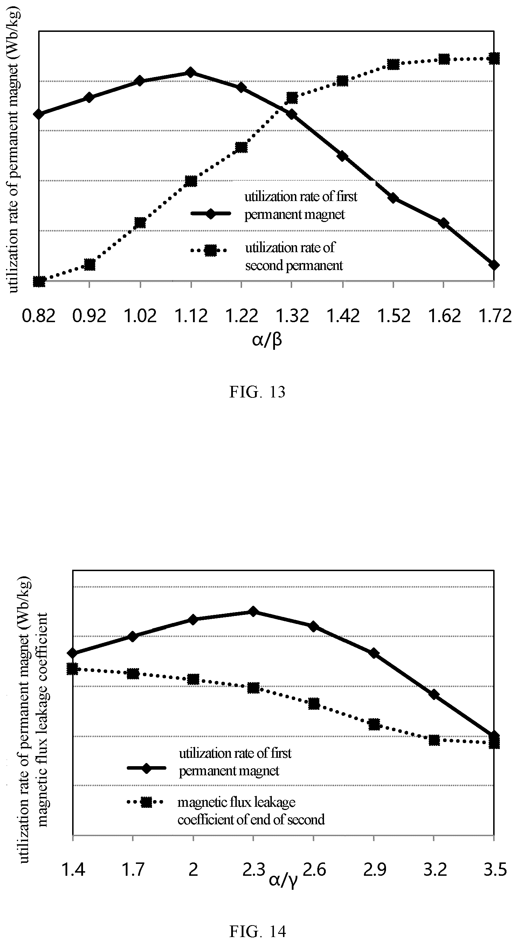

Specifically, the magnetic conductive portion in the second rotor core 2 is a path for the magnetic field lines of the first permanent magnet 3 to pass directly. If $\alpha/\beta$ is too large, a relatively great portion of the first permanent magnet 3 cannot be in a direct contact with the second rotor core 2, and there is no path allowing the magnetic field lines of the relatively great portion of the first permanent magnet 3 to pass, and this portion of the first permanent magnet 3 has no contribution to the air-gap magnetic flux density, thus resulting in a low utilization rate of the first permanent magnet 3. If $\alpha/\beta$ is too small, the coverage area of the first permanent magnet 3 on the end face of the second rotor core 2 is relatively small, thus leaving a relatively large area of the second permanent magnet 4 uncovered by the first permanent magnet 3. The magnetic field lines of the uncovered portion of the second permanent magnet 4 are not squeezed by the magnetic field lines of the first permanent magnet 3, therefore the end magnetic flux leakage is relatively large, thus causing the low utilization rate of the second permanent magnets 4. FIG. 13 shows curves of the utilization rate of the first permanent magnet varying with $\alpha/\beta$ and the utilization rate of the second permanent magnet varying with $\alpha/\beta$. As $\alpha/\beta$ increases, the magnetic field lines of the first permanent magnet 3 increase, and the utilization rate thereof first increases, and then the utilization rate of the first permanent magnet begins to decline due to the limitation of the flux path thereof. As $\alpha/\beta$ increases, the utilization rate of the second permanent magnet first increases and then gradually stabilizes. The range of $\alpha/\beta$ is selected by taking an overall consideration of the utilization rates of the first permanent magnet 3 and second permanent magnet 4.

The projection is thrown onto the end face of the second rotor core 2 along the axial direction of the second rotor core 2, and in the projection plane, $\alpha$ represents the angle between the lines, which connect respective two end-points of a pole of the first permanent magnet 3 located on its side adjacent to the rotor outer circle and the center of the second rotor core 2 respectively; and $\gamma$ represents an angle between lines, which connect respective two end-points of a pole of the second permanent magnets 4 located on its side adjacent to the rotor outer circle and the center of the second rotor core 2, and it is satisfied that $\alpha/\gamma > 1$. In some embodiments, $2.0 \leq \alpha/\gamma \leq 3.3$.

By defining the relationship between $\alpha$ and $\gamma$, on one hand, the end magnetic flux leakage of the second permanent magnet 4 can be reduced, and on the other hand, the utilization rates of the first permanent magnet 3 and the second permanent magnet 4 can be improved. Specifically, if $\alpha/\gamma$ is too large, the utilization rate of the first permanent magnet 3 is low. If $\alpha/\gamma$ is too small, the end magnetic flux leakage of the second permanent magnet 4 increases, thus reducing the utilization rate the second permanent magnets 4 for the reason that magnetic flux leakage has no contribute to the torque. FIG. 14 shows curves of the utilization rate of the first permanent magnet varying with $\alpha/\gamma$ and the end magnetic flux leakage coefficient of the second permanent magnet varying with $\alpha/\gamma$. As $\alpha/\gamma$ increases, the utilization rate of the first permanent magnet first increases and then decreases, and the end magnetic flux leakage coefficient of the second permanent magnet decreases and then gradually stabilizes. The range of $\alpha/\gamma$ is selected by taking an overall consideration of the utilization rate of the first permanent magnet and the magnetic flux leakage at the ends of the second permanent magnets.

In some embodiments, the projection is thrown onto the end face of the second rotor core 2 along the axial direction of the second rotor core 2, and in the projection plane, a pole arc angle of a pole of the second rotor core 2 is 360/2p, and it is satisfied that $360/2p/\alpha \geq 1$, where $p$ represents the number of pole pairs of the second rotor core 2. In some embodiments, $1.3 \geq 360/2p/\alpha \geq 1$.

By defining the relationship between $\alpha$ and a rotor pole arc, the space at the end face of the second rotor core 2 may be utilized as much as possible to arrange the first permanent magnet 3, thereby improving the motor's output while ensuring the rotor will not be saturated. Specifically, when $360/2p/\alpha = 1$, $\alpha$ is equal to the pole arc angle of a pole of the rotor, and in this case, the space utilization rate of the end face of the second rotor core 2 is the maximum, and accordingly, a saturation level of the rotor is also high. When $360/2p/\alpha > 1$, $\alpha$ is less than the pole arc angle of a pole of the second rotor core 2, and in this case, the space utilization rate of the end face of the second rotor core 2 is reduced, and the saturation level of the rotor is reduced as well.

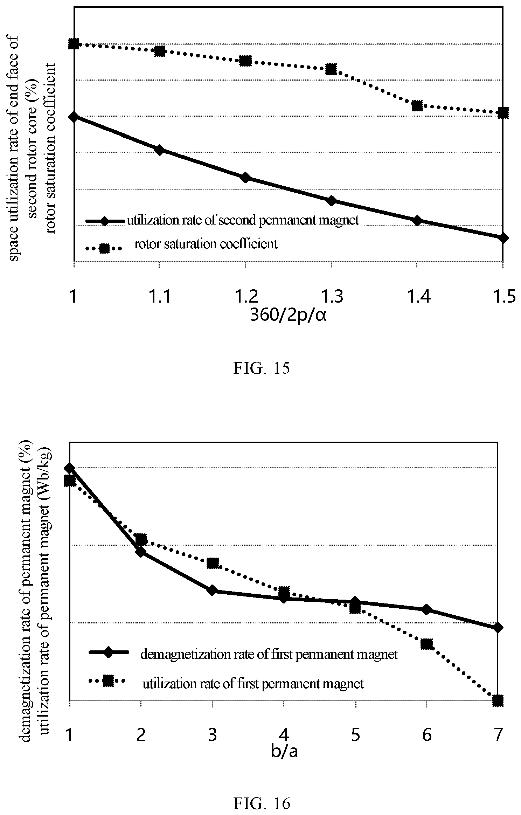

By setting a value of $360/2p/\alpha$, the space utilization rate of the end face of the second rotor core 2 and the saturation level of the rotor can be adjusted simultaneously. A ratio range is defined to ensure that a suitable rotor saturation level is selected to maximize the space utilization rate of the end face of the second rotor core 2. FIG. 15 shows curves of the space utilization rate of the end face of the second rotor core 2 varying with $360/2p/\alpha$ and the rotor saturation coefficient varying with $360/2p/\alpha$. As $360/2p/\alpha$ increases, the end face space utilization rate of the second rotor core 2 decreases, and the rotor saturation coefficient also decreases. It should be noted that a lower rotor saturation coefficient is not necessarily better, and an appropriate saturation coefficient can ensure a reasonable use of the core. If the saturation coefficient is too low, on one hand, there will be excess core volume, thus causing a waste of materials, and on the other hand, it means that there are insufficient magnetic field lines, thus reducing the motor's output. The disclosure prefers a high space utilization rate of the end face of the second rotor core and a moderate rotor saturation, and for different motor operating conditions, the value of $360/2p/\alpha$ may be selected by considering the two factors.

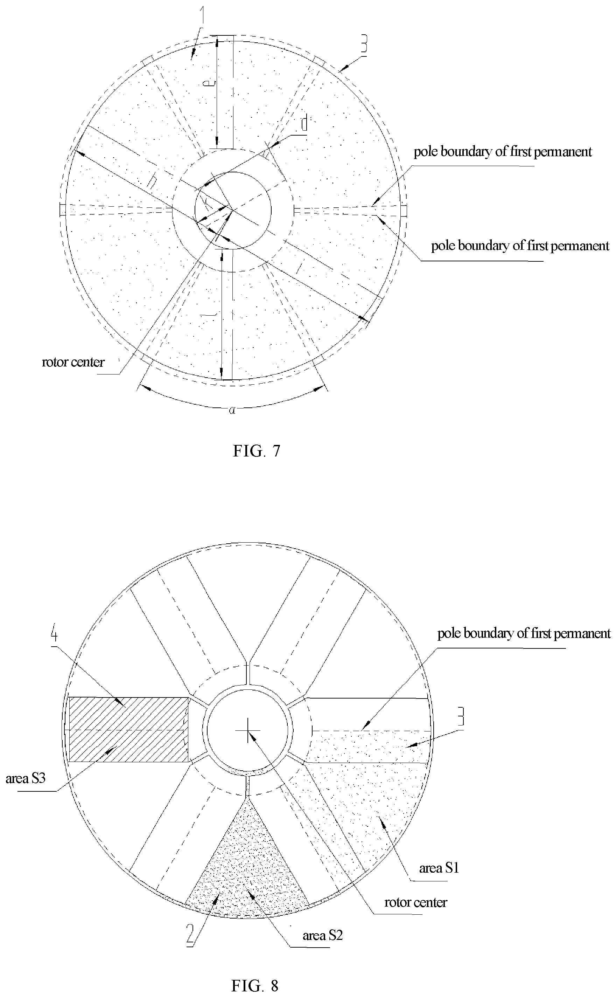

As shown in FIG. 8, in some embodiments, the projection is thrown onto the end face of the second rotor core 2 along the axial direction of the second rotor core 2, and in the projection plane, an area of a pole of the first permanent magnet 3 is $s1$, and an area of a pole of the second rotor core 2 is $s2$, and it is satisfied that $s1/s2 \geq 1$. The rotor structure ensures that the magnetic field lines of the first permanent magnet pass through the second rotor core 2 and enter the air gap to interact with the stator magnetic field to generated the torque. By defining a ratio relationship between the area of a pole of the first permanent magnet 3 and the area of a pole of the second rotor core 2 in the projection plane, the ratio of the area of a pole of the first permanent magnet 3 to the area of a pole of the second rotor core 2 is set more reasonably, thus improving the utilization rate of the second permanent magnet while ensuring the utilization rate of the first permanent magnet, reducing the end magnetic flux leakage of the rotor, and enhancing a comprehensive utilization rate of the first permanent magnet 3 and the second permanent magnet 4, thereby improving the performance of the motor. In some embodiments, $1.05 \leq s1/s2 \leq 1.95$. Further, in some embodiments, $1.25 \leq s1/s2 \leq 1.85$.

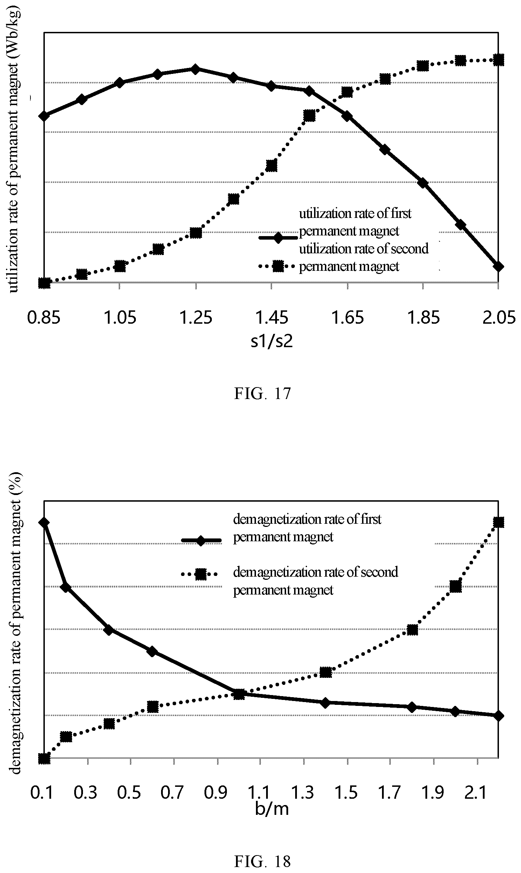

By defining the areas of the first permanent magnet 3 and the second rotor core 2, the low utilization rates of the first permanent magnet 3 and the second permanent magnet 4 are avoided. FIG. 17 shows curves of the utilization rate of the first permanent magnet varying with $s1/s2$ and the utilization rate of the second permanent magnet varying with $s1/s2$. By comprehensively considering the utilization rates of the first permanent magnet and the second permanent magnet, the range of $s1/s2$ is selected.

As shown in the figures, when $1.25 \leq s1/s2 \leq 1.85$, the comprehensive utilization rate of the first permanent magnet 3 and the second permanent magnet 4 is relatively high, thus allowing the functions of the first permanent magnet 3 and the second permanent magnet 4 to be more fully utilized, and improving the performance of the motor.

In some embodiments, the projection is thrown onto the end face of the second rotor core 2 along the axial direction of the second rotor core 2, and in the projection plane, the area of a pole of the first permanent magnet 3 is $s1$, an area of a pole of the second permanent magnets 4 is $s3$, and in a section passing through the central axis of the second rotor core 2, an area of a pole of the first permanent magnet 3 is $s4$, and an area of a pole of the second permanent magnet 4 is $s5$, where $0.8 \times s3 \leq s1 \leq 2.4 \times s5$, and/or $0.3 \times s3 \leq s4 \leq 0.8 \times s5$.

By defining the relationship between areas of the first permanent magnet 3 and the second permanent magnet 4, it is ensured that the first permanent magnet 3 and the second permanent magnet 4 can not only increase the motor's output but also maintains certain anti-demagnetization capabilities. Specifically, $s1$ and $s4$ determine the contribution of the first permanent magnet 3 to the motor's output and the anti-demagnetization capability of the first permanent magnet 3, respectively, while $s5$ and $s3$ determine the contribution of the second permanent magnet 4 to the motor's output and the anti-demagnetization capability of the second permanent magnet 4, respectively. By defining the relationship between $s1$ and $s3$ to ensure that $s1$ has a certain value, the axial magnetic field lines may be provided for the motor. By defining the relationship between $s1$ and $s5$, an optimal proportion of magnetic flux linkage between the first permanent magnet 3 and the second permanent magnet 4 can be ensured, thus reducing the impact of saturation on the utilization rate of the no-load magnetic flux linkage of the motor. By defining the relationship between $s4$ and $s3$, the anti-demagnetization capability of the first permanent magnet 3 and the consistency of demagnetization of the first permanent magnet 3 and the demagnetization of the second permanent magnet 4 can be ensured. By defining the relationship between $s4$ and $s5$, the motor can be prevented from being overly saturated due to an overly large $s4$.

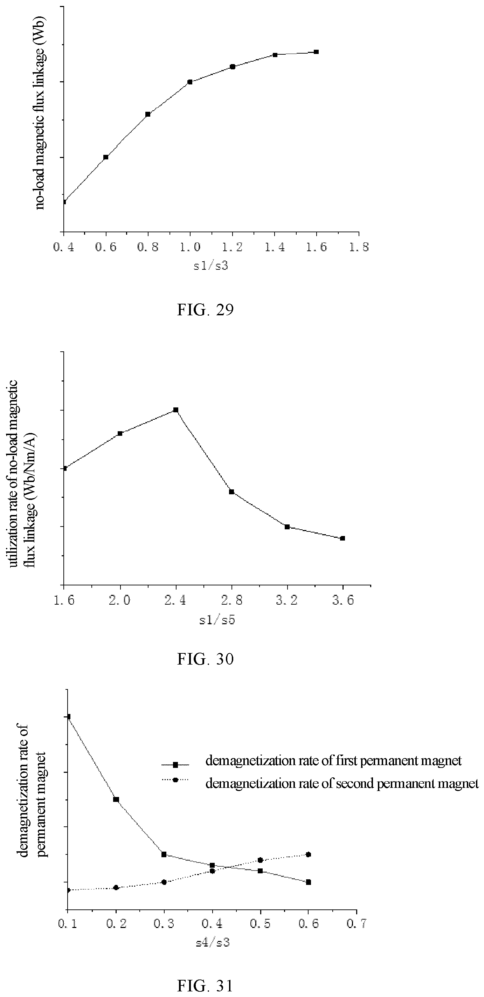

As shown in FIGS. 29 to 32, as $s1/s3$ increases, the no-load magnetic flux linkage first increases linearly, then the increasing trend gradually slows down. The value of $s1/s3$ is selected at an inflection point of linear increase in the no-load magnetic flux linkage. As $s1/s5$ increases, the utilization rate of the no-load magnetic flux linkage first increases and then decreases. When the motor becomes overly saturated, the utilization rate of the no-load magnetic flux linkage drops sharply. The value of $s1/s5$ is selected at an inflection point of change of the utilization rate of the no-load magnetic flux linkage. As $s4/s3$ increases, under the same demagnetization current, the demagnetization rate of the first permanent magnet 3 decreases, while the demagnetization rate of the second permanent magnet 4 slightly increases, and the difference between a demagnetization rate of the first permanent magnet 3 and a demagnetization rate of the second permanent magnet 4 tends to decrease, thus improving the consistency therebetween. As $s4/s5$ increases, the saturation level of the motor rises, and the value of $s4/s5$ is selected at the inflection point of the excessive saturation of the motor.

In some embodiments, the projection is thrown onto the end face of the second rotor core 2 along the axial direction of the second rotor core 2, and in the projection plane, the area of a pole of the first permanent magnet 3 is s1, and the length of a line connecting the central axis of the second rotor core 2 and any point on the outer circle is $j$, and it is satisfied $1 \leq s1/max(j) \leq 20$. In some embodiments, $3 \leq s1/max(j) \leq 16$. Further, in some embodiments, $5 \leq s1/max(j) \leq 13$.

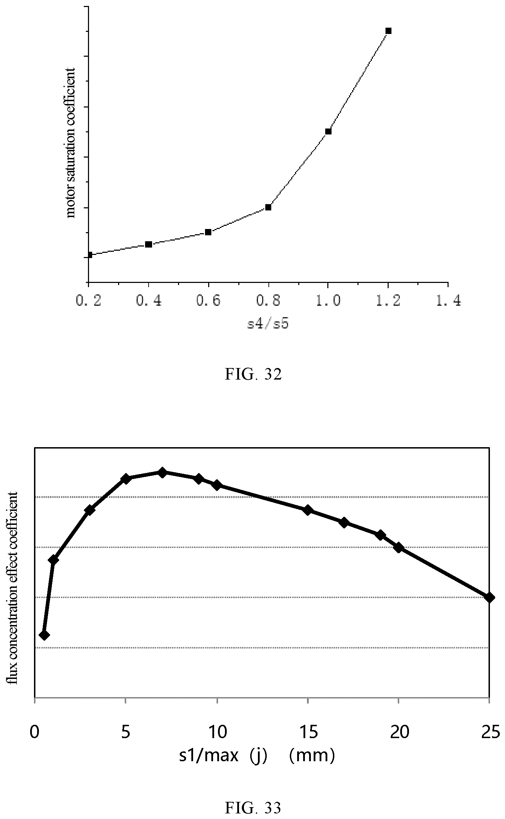

By defining a range of this ratio, the flux concentration effect of the motor can be enhanced, thus increasing the motor's output. Specifically, if $s1/max(j)$ is too small, then s1 is too small or $max(j)$ is too large, which may result in two cases: under one case, since the area s1 is too small, the covered portion of the ends of the second permanent magnet 4 is too small, thus resulting in an increase in the end magnetic flux leakage of the second permanent magnet 4 and a weakened flux concentration effect of the motor; and under another case, the motor has too many pole pairs, thus making it difficult to arrange the permanent magnets. If $s1/max(j)$ is too large, then $s1$ is too large or $max(j)$ is too small, thus resulting in few pole pairs and a weak flux concentration effect. FIG. 33 shows a curve of flux concentration effect coefficient of the motor varying with $s1/max(j)$. As $s1/max(j)$ increases, the flux concentration effect coefficient first increases and then decreases, so that both excessively large and excessively small $s1/max(j)$ values will weaken the flux concentration effect of the motor.

In some embodiments, the projection is thrown onto the end face of the second rotor core 2 along the axial direction of the second rotor core 2, and in the projection plane, the area of a pole of the first permanent magnet 3 is $s1$, the area of a pole of the second rotor core 2 is $s2$, and the area of a pole of the second permanent magnet 4 is $s3$, and it is satisfied that $0.2 \leq s2/(s1 + s3) \leq 1$. In some embodiments, $0.3 \leq s2/(s1 + s3) \leq 0.6$.

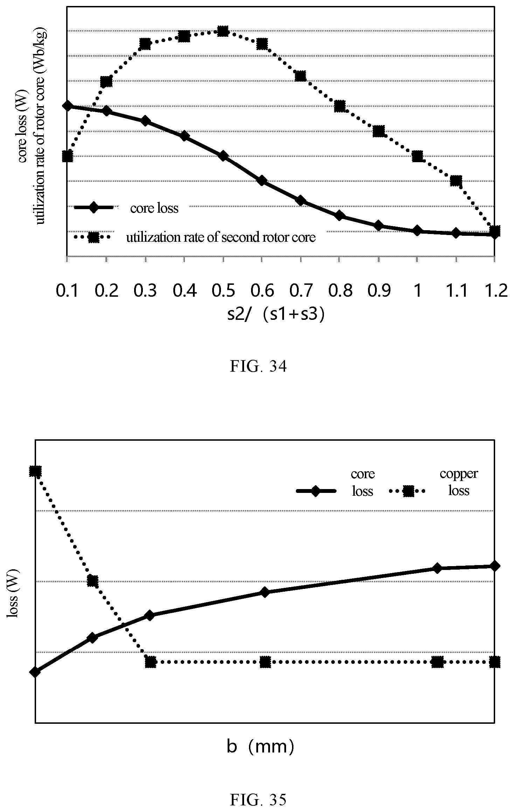

By defining the range of this ratio, it can be ensured that there is an appropriate magnetic circuit area for the magnetic field lines of the first permanent magnet and the magnetic field lines of the second permanent magnet. On one hand, the case in which the motor may be saturated due to too small magnetic circuit area, thus causing an increase of core loss, will not occur. On the other hand, the case in which the motor volume may become too large due to a too large magnetic circuit area, thus causing a waste of material, will not occur. FIG. 34 shows curves of the core loss and the utilization rate of the second rotor core varying with $s2/(s1 + s3)$. As $s2/(s1 + s3)$ increases, the saturation level of the motor decreases, and the core loss reduces; after the saturation level reaches a certain saturation level, the core loss gradually stabilizes; after the saturation level of the motor decreases, the effective magnetic circuit area increases, thereby allowing magnetic field lines to pass smoothly and increasing the utilization rate of the second rotor core; and after another certain saturation level is obtained, if the magnetic circuit area is further increased, the utilization rate of the second rotor core will begin to decline.

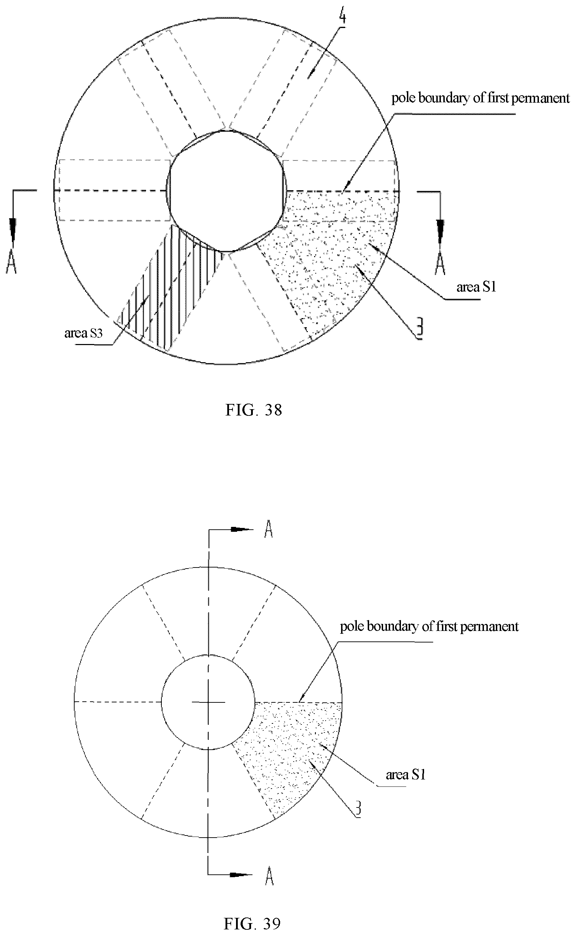

As shown in FIGS. 6 and 39, in some embodiments, a thickness of the first permanent magnet 3 along the axial direction of the second rotor core 2 is $b$. The projection is thrown onto the end face of the second rotor core 2 along the axial direction of the second rotor core 2, and in the projection plane, the sum of angles, each of which is formed between lines connecting the center of the second rotor core 2 and two end-points of each pole of the first permanent magnet 3 located on its side adjacent to the rotor outer circle respectively, is $\alpha \times 2q$. A ratio of the sum of the angles to an angle of a full circle of the second rotor core 2 is a, and a $= \alpha \times 2q/360$, and $2 \leq b/a \leq 6$, where $q$ represents the number of pole pairs of the first permanent magnet 3. In some embodiments, $3 \leq b/a \leq 5$.

By defining the ratio of $b$ to a, it can be ensured that the first permanent magnet has a certain axial thickness, thereby enhancing the anti-demagnetization performance of the first permanent magnet. Specifically, a $= \alpha \times 2q/360$, where $q$ represents the number of pole pairs of the first permanent magnet 3, a represents a total pole arc coefficient of the first permanent magnet 3, and the value of a determines a range of the demagnetization field directly borne by the first permanent magnet 3. When a is relatively small, the range of the demagnetization field borne by the first permanent magnet 3 is also relatively small, thus ensuring that the axial thickness $b$ of the first permanent magnet 3 required for the anti-demagnetization capability thereof is also relatively small, and vice versa. By defining the minimum value of $b/a$, the anti-demagnetization capability of the first permanent magnet 3 can be ensured. By defining the maximum value of $b/a$, while ensuring the anti-demagnetization capability of the first permanent magnet 3, a waste of the first permanent magnet 3, which will result in a decline in the utilization rate thereof, can be avoided. FIG. 16 shows curves of the demagnetization rate of the first permanent magnet varying with $b/a$ and the utilization rate of the first permanent magnet varying with $b/a$. As $b/a$ increases, the demagnetization rate of the first permanent magnet under the same current decreases and a decreasing trend gradually slows down, but the utilization rate of the first permanent magnet decreases and a decreasing trend increases. By comprehensively considering the anti-demagnetization capability and the utilization rate of the first permanent magnet, the range of $b/a$ is selected.

In some embodiments, the projection is thrown onto the end face of the second rotor core 2 along the axial direction of the second rotor core 2, and in the projection plane, the area of a pole of the first permanent magnet 3 is s1, and the thickness of the first permanent magnet 3 along the axial direction of the second rotor core 2 is b, where s1 is negatively correlated with b. The unit of area s1 is mm², and the unit of the thickness b is mm.

In some embodiments, the relationship between s1 and b satisfies a dimensionless formula s1 = $-A \times b + C$, where $A$ is in a range from 5 to 20, and C is in a range from 120 to 400.

By defining the relationship between $s1$ and $b$, the saturation level of the motor can be reduced, thereby improving the utilization rate of the no-load magnetic flux linkage of the motor, and lowering the core loss of the motor. Specifically, s1 represents a magnetic supply area of a pole of the first permanent magnet 3. When the first permanent magnet 3 has a relatively large magnetic supply area and a relatively small axial thickness $b,$ the rotor can reach an appropriate saturation level. A further increase in $b$ will cause the rotor to be overly saturated, thus not only diminishing an effect of improving no-load magnetic flux linkage but also increasing the core loss, and vice versa. Therefore $s1$ is negatively correlated with $b.$ By defining the relationship curve between $s1$ and $b,$ on one hand, the use of the first permanent magnet 3 can be maximized to improve the magnetic flux linkage of the motor, thereby reducing the current and the copper loss. On the other hand, the motor may be prevented from being overly saturated, thus lowering the core loss, and when the copper loss and the core loss are balanced, the motor performance is optimal. Experimental verification shows that for a certain $s1$, when an appropriate value of $b$ is selected, the core loss and the copper loss account for 52% and 48% of a total loss, respectively, thus achieving a substantial balance. At this time, if $b$ is further increased by 1 mm, the core loss of the motor is increased by 10.2%, while the reduction in the copper loss is less than 1%, and the performance of the motor is worsened. FIG. 35 shows trends of the core loss and the copper loss varying with an increase of $b$ under the same s1.

In some embodiments, the projection is thrown onto the end face of the second rotor core 2 along the axial direction of the second rotor core 2, and in the projection plane, the sum of the angles, each of which is formed between the lines connecting the center of the second rotor core 2 and two end-points of each pole of the first permanent magnet 3 located on its side adjacent to the rotor outer circle respectively, is $\alpha \times 2q$. The ratio of the sum of the angles to the angle in the circular segment of the second rotor core 2 is a, and a = $\alpha \times 2q/360$, and 1.7 ≤ a $\times$ $b$ ≤ 12.

In some embodiments, 2 ≤ a $\times$ $b$ ≤ 10 .

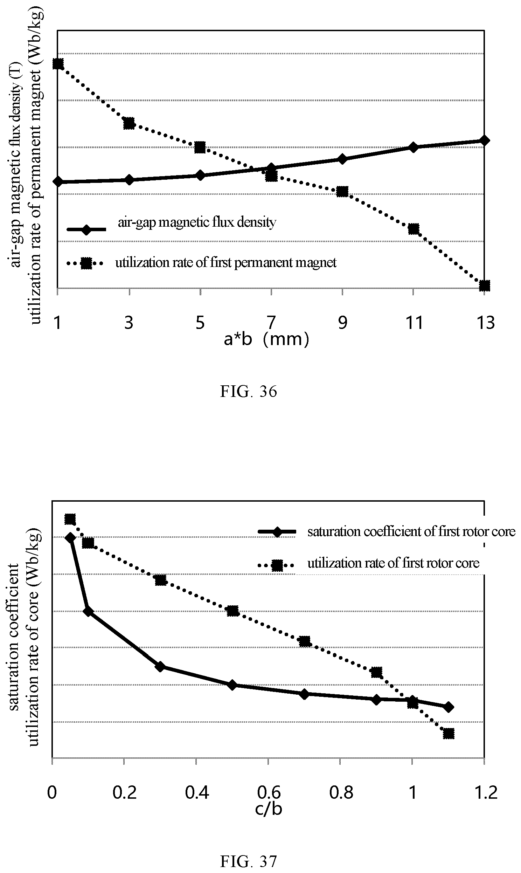

By defining the product relationship of a and $b,$ it can be ensured that the first permanent magnet 3 occupies a certain angle on the second rotor core 2, thereby enhancing magnetic field strength of the motor and the motor's output. Specifically, a = $\alpha \times 2q/360$, where $q$ represents the number of pole pairs of the first permanent magnet 3, and a represents the total pole arc coefficient of the first permanent magnet 3, and the value of a determines the magnetic supply area of the first permanent magnet 3. When a is relatively small, the magnetic supply area of the first permanent magnet 3 is small, and a larger axial thickness $b$ is required to achieve an appropriate saturation level, and vice versa. By defining the minimum value of a $\times$ $b,$ it can be ensured that the first permanent magnet 3 occupies a certain area on the second rotor core 2, thereby strengthening the magnetic field strength of the rotor. By defining the maximum value of a $\times$ $b,$ a waste of the first permanent magnet 3 can be avoided while ensuring the magnetic field strength of the rotor. FIG. 36 shows curves of the air-gap magnetic flux density and the utilization rate of the first permanent magnet varying with a $\times$ $b.$ As a $\times$ $b$ increases, the air-gap magnetic flux density increases, but after the magnetic circuit is saturated, the increase in the air-gap magnetic flux density gradually decreases, and the decrease in the utilization rate of the first permanent magnet becomes fast.

In some embodiments, a thickness of the second permanent magnet 4 along a magnetization direction thereof is $m$ and 0.2 ≤ $b/m$ ≤ 2.

In some embodiments, 0.4 ≤ $b/m$ ≤ 1.4.

By defining the relationship between $b$ and $m,$ it can be ensured that both the first permanent magnet 3 and the second permanent magnet 4 have certain anti-demagnetization capabilities and consistent demagnetization behaviors. Specifically, the anti-demagnetization capability of the first permanent magnet 3 depends on the axial thickness $b$ thereof, and the anti-demagnetization capability of the second permanent magnet 4 depends on the thickness $m$ along the magnetization direction thereof. By defining the minimum value of $b/m,$ the anti-demagnetization capabilities of the first permanent magnet 3 and the second permanent magnet 4 can be ensured. By defining a range of $b/m,$ the consistency of the anti-demagnetization capabilities of the first permanent magnet 3 and the second permanent magnet 4 can be ensured. By defining the maximum value of $b/m,$ the cost of the permanent magnets is reduced while ensuring the anti-demagnetization capabilities thereof. FIG. 18 shows curves of demagnetization rates of the first permanent magnet and the second permanent magnet varying with $b/m$ under the same demagnetization current. As $b/m$ increases, the demagnetization rate of the first permanent magnet decreases, while the demagnetization rate of the second permanent magnet increases. The demagnetization consistency of the first permanent magnet and the second permanent magnet is improved first and then is deteriorated. The range of $b/m$ is selected by considering the anti-demagnetization capabilities of the permanent magnets and the demagnetization consistency thereof.

In some embodiments, a thickness of the first rotor core 1 along the axial direction of the second rotor core 2 is $c$ , and it is satisfied that 0.1 ≤ $c/b$ ≤ 1.

The value of $c$ is greater than or equal to the axial thickness of a single core lamination of the second rotor core 2.

By defining the relationship between *b* and *c*, an optimal thickness ratio of the first rotor core 1 and the first permanent magnet 3 can ensured, thereby enhancing the utilization rate of the motor while improving the motor's output. Specifically, the magnetic field lines of the first permanent magnet 3 passes through the first rotor core 1 along the axial direction to form a circuit. The first rotor core 1 and the first permanent magnet 3 are arranged to be directly adjacent to each other to avoid a loss of the magnetic field lines during a circulation. Additionally, the axial thickness of the first rotor core 1 determines the smoothness and saturation level of the magnetic circuit for the circulation of the magnetic field lines of the first permanent magnet 3. By defining the minimum value of *c/b*, it can be ensured that the magnetic circuit of the first permanent magnet 3 will not be saturated, thereby improving the magnetic flux linkage of the first permanent magnet 3. By defining the maximum value of c/b, the utilization rate of the first rotor core 1 can be enhanced, and the cost thereof is reduced. FIG. 37 shows curves of the saturation coefficient and the utilization rate of the first rotor core varying with *c/b*. As *c/b* increases, both the saturation coefficient and the utilization rate of the first rotor core 1 decrease. The range of *c/b* is selected by comprehensively considering the saturation level and the cost of the first rotor core.

As shown in FIG. 7, in some embodiments, the projection is thrown onto the end face of the second rotor core 2 along the axial direction of the second rotor core 2, and in the projection plane, *d* denotes the length of a line connecting the center of the second rotor core 2 and a midpoint of a radial inner edge of a pole of the first permanent magnet 3, and *i* denotes the length of a line connecting the center of the second rotor core 2 and a midpoint of a radial outer edge of the first permanent magnet 3, and it is satisfied that $0.2 \leq d/max(i) \leq 0.8$. In some embodiments, $0.3 \leq d/max(i) \leq 0.6$.

The relationship of $d/max(i)$ is defined, thereby helping to reduce the assembly difficulty of the motor and the processing difficulty of the first permanent magnet 3. Specifically, if $d/max(i)$ is too small, then the inner side of the first permanent magnet 3 is too small or the outer side thereof is too large, thus increasing the difficulty of assembling the first permanent magnet 3 with the rotary shaft and the stator. If $d/max(i)$ is too large, then the inner side of the first permanent magnet 3 is too large or the outer side thereof is too small, and the distance between the inner and outer sides is too small, thus increasing the processing difficulty of the first permanent magnet 3 or even making it impossible to process the first permanent magnet 3.

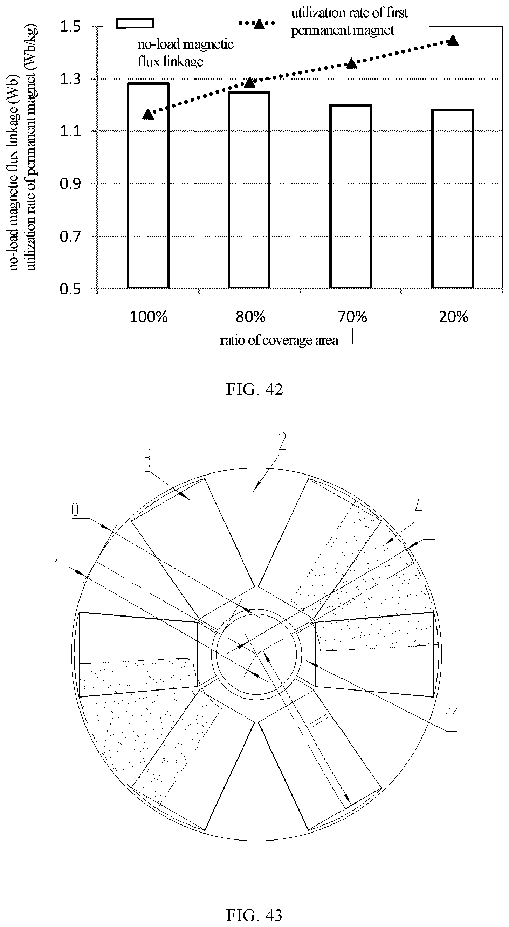

As shown in FIG. 43, in some embodiments, the projection is thrown onto the end face of the second rotor core 2 along the axial direction of the second rotor core 2, and in the projection plane, i denotes the length of a line connecting the central axis of the second rotor core 2 and a midpoint of an end-edge of a pole of the first permanent magnet 3 located on its side adjacent to the rotor outer circle, and the maximum length of the line connecting the central axis of the second rotor core 2 and any point on the rotor outer circle is *max(j)*, and it is satisfied that *max(i)* ≤ *max(j)*.

In some embodiments, *ii* denotes the length of a line connecting the central axis of the second rotor core 2 and a midpoint of an end-edge of a pole of the second permanent magnet 4 located on its side adjacent to the outer circle, and it is satisfied that $max(j) \geq max(i) \geq 0.8 \times ii$.

In some embodiments, $max(j) \geq max(i) \geq 0.95 \times ii$.

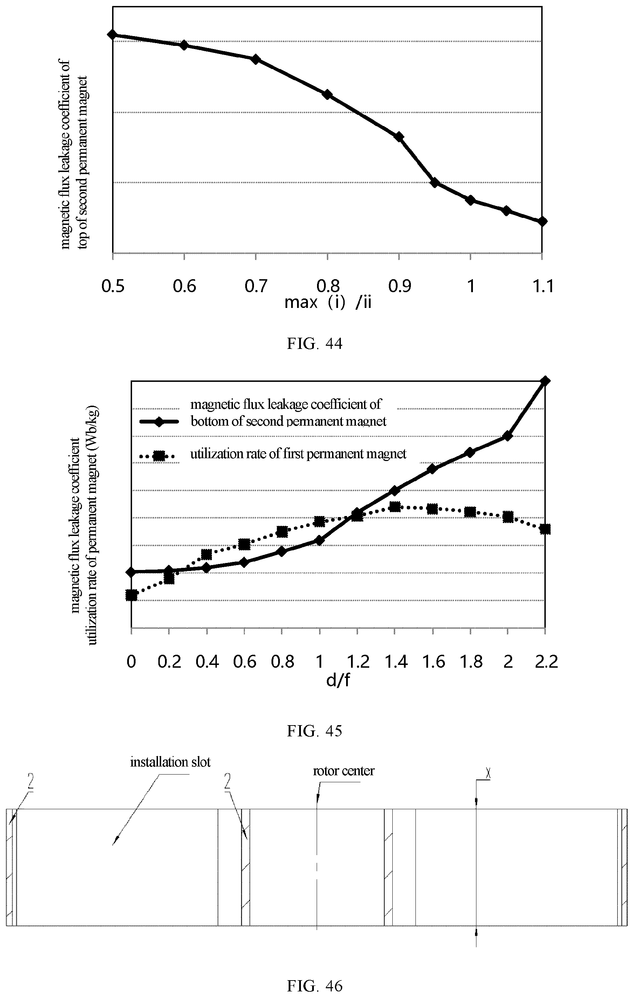

By defining the relationship between *max(i), ii,* and *max(j),* the length of the line connecting the rotor center with the midpoint of the first permanent magnet 3 located on its side adj acent to the outer circle may be defined. Thus, on one hand, the contributions of the first permanent magnet 3 or second permanent magnet 4 to the motor's output can be enhanced, and on the other hand, the assembly difficulty of the motor can be reduced. Specifically, the magnetic flux leakage (top magnetic flux leakage) is easy to generate at the ends of the second permanent magnet 4 located on its side adjacent to the rotor outer circle. The magnetic field lines of the first permanent magnet 3 squeeze the magnetic field lines of the second permanent magnet 4 at the two ends, thus cutting off the magnetic flux leakage path and weakening the top magnetic flux leakage. By defining the relationship between *max(i)* and *ii*, it is ensured that the magnetic field lines of the first permanent magnet 3 are within an effective range thereof, thereby effectively reducing the top magnetic flux leakage of the second permanent magnet 4. Additionally, by defining the relationship between *max(j)* and *max(i), t*he precision requirements for the assembly of the first permanent magnet 3 may be reduced, thereby reducing the assembly difficulty of the motor. FIG. 44 shows a relationship curve of a top magnetic flux leakage coefficient of the second permanent magnet varying with *max(i)/ii.* As *max(i)/ii* increases, the top magnetic flux leakage coefficient of the second permanent magnet decreases, and a decrease trend thereof changes. When *max(i)/ii* is greater than 0.8, a first inflection point of the decrease trend occurs. When *max(i)/ii* is greater than 0.95, a second inflection point occurs.

In some embodiments, *d* denotes the length of a line connecting the central axis of the second rotor core 2 and a midpoint of a radial inner edge of a pole of the first permanent magnet 3, and *f* denotes the length of a line connecting the central axis of the second rotor core 2 and a midpoint of the radial inner edge of a pole of the second permanent magnet 4, and it is satisfied that $0 \leq d/f \leq 2$.

In some embodiments, $0.8 \leq d/f \leq 1.6$.

By defining a proportional relationship between *d* and *f,* the length of the line connecting the rotor center and the midpoint of the edge of the first permanent magnet 3 adjacent to the rotary shaft can be defined, thereby improving the utilization rates of the first permanent magnet 3 or second permanent magnet 4. Specifically, the magnetic flux leakage (bottom magnetic flux leakage) is easy to generate at the end of the second permanent magnet 4 adjacent to the rotary shaft of the rotor. The magnetic field lines of the first permanent magnet 3 squeeze the magnetic field lines of the second permanent magnet 4 at the end, thus cutting off the magnetic flux leakage path and restraining the bottom magnetic flux leakage of the second permanent magnet 4. By defining the maximum value of $d/f$, the second permanent magnet 4 can be prevented from excessively going beyond the range of the magnetic field lines of the first permanent magnet 3, thus avoiding an increase in the bottom magnetic flux leakage and avoiding a reduction of the utilization rate of the second permanent magnet. By defining the minimum value of $d/f$, the inner volume of the first permanent magnet 3 may be prevented from being too small, thus avoiding weakening the axial magnetic field lines, and avoiding a waste of material and a low utilization rate. FIG. 45 shows curves of a bottom magnetic flux leakage coefficient of the second permanent magnet and a utilization rate of the first permanent magnet varying with $d/f$. As $d/f$ increases, the bottom magnetic flux leakage coefficient of the second permanent magnet increases, with a slower increase when $d/f$ is less than 1.6, and when $d/f = 2$, a second turning point of the increase occurs. As $d/f$ increases, the utilization rate of the first permanent magnet first increases, and then the utilization rate of the first permanent magnet starts to decrease due to a decrease of the inner side of the first permanent magnet which affects the axial magnetic field lines.

As shown in FIG. 7, in some embodiments, the projection is thrown onto the end face of the second rotor core 2 along the axial direction of the second rotor core 2, and in the projection plane, $i$ denotes the length of a line connecting the central axis of the second rotor core 2 and the midpoint of an end-edge of a pole of the first permanent magnet 3 adjacent to the rotor outer circle, and $j$ denotes the length of the line connecting the central axis of the second rotor core 2 and any point on the rotor outer circle of the second rotor core 2, and $h$ denotes the length of the line connecting the central axis of the second rotor core 2 and any point on the rotor outer circle of the first rotor core 1, and it is satisfied that $max(h) \leq max(j)$, and/or $min(h) \geq 0.8 \times max(i)$.

In some embodiments, $0.9 \leq min(h)/max(i) \leq 1.4$.

In some embodiments, $1 \leq min(h)/max(i) \leq 1.3$.

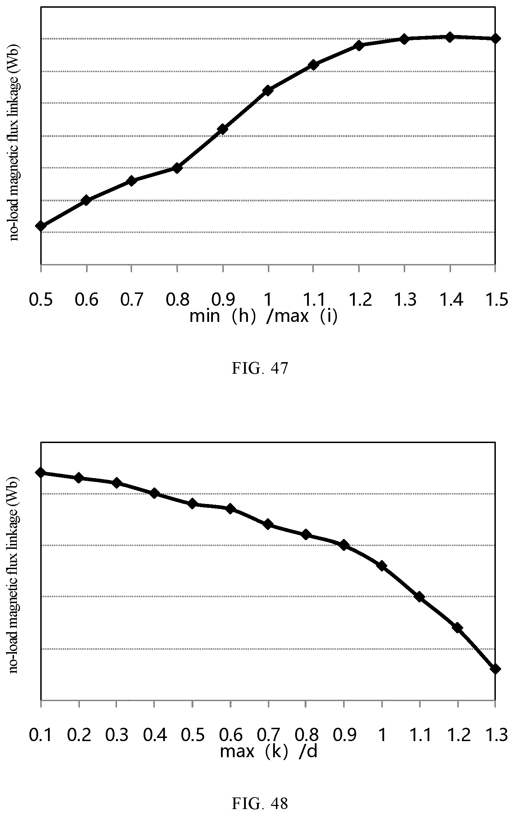

By defining this dimension of the first rotor core 1, the assembly difficulty of the motor can be reduced while minimizing the magnetic flux leakage the first permanent magnet 3 on its side adjacent to the rotor outer circle. Specifically, by defining the maximum value of $h$, air gaps with certain widths can be formed between respective rotor cores (including the first rotor core 1 and the second rotor core 2) and the stator core 12, thus reducing the difficulty in assembling the rotor into the stator. By defining the minimum value of $h$, it can be ensured that there is an effective magnetic circuit in the magnetic supply surface of the first permanent magnet 3, thus avoiding magnetic flux leakage due to a lack of an effective axial main magnetic circuit. FIG. 47 shows a relationship curve of the no-load magnetic flux linkage varying with $min(h)/max(i)$. As $min(h)/max(i)$ increases, the no-load magnetic flux linkage increases, but an increase rate decreases. When $min(h)/max(i)$ is less than 0.8, the no-load magnetic flux linkage is small due to a large magnetic flux leakage of the first permanent magnet. When $min(h)/max(i)$ is greater than 1.4, the no-load magnetic flux linkage substantially has no change as the magnetic field lines of the first permanent magnet fully pass through the magnetic circuit.

In some embodiments, the projection is thrown onto the end face of the second rotor core 2 along the axial direction of the second rotor core 2, and in the projection plane, $d$ denotes the length of a line connecting the central axis of the second rotor core 2 and a midpoint of a radial inner edge of a pole of the first permanent magnet 3, and $k$ denotes the length of a line connecting the central axis of the second rotor core 2 and any point on a radial inner edge of the first rotor core 1, and it is satisfied that $max(k) \leq d$.

In some embodiments, $0.2 \leq max(k)/d \leq 1$.

By defining this dimension of the first rotor core 1, the magnetic flux leakage of the first permanent magnet 3 adjacent to the rotary shaft can be reduced. Specifically, by defining the maximum value of $k$, it can be ensured that there is an axial main magnetic circuit at the end of the first permanent magnet 3 adjacent to the rotary shaft, thereby avoiding the magnetic flux leakage due to the lack of the main magnetic circuit. FIG. 48 shows a relationship curve of the no-load magnetic flux linkage varying with $max(k)/d$. When $max(k)/d$ is less than 0.2, the no-load magnetic flux linkage increases slightly due to a relatively large margin of the main magnetic circuit area of the first permanent magnet 3. When $max(k)/d$ is greater than 1, a decrease rate of the no-load magnetic flux linkage increases as the flux path of the magnetic field lines of the first permanent magnet 3 is restricted.

In some embodiments, a thickness of the first rotor core 1 along the axial direction of the motor is $c$, and a thickness of the second permanent magnet 4 along the magnetization direction thereof is $m$, and it is satisfied that $0.1 \times m \leq c \leq m$.

In some embodiments, $0.1 \times m \leq c \leq 0.5 \times m$.

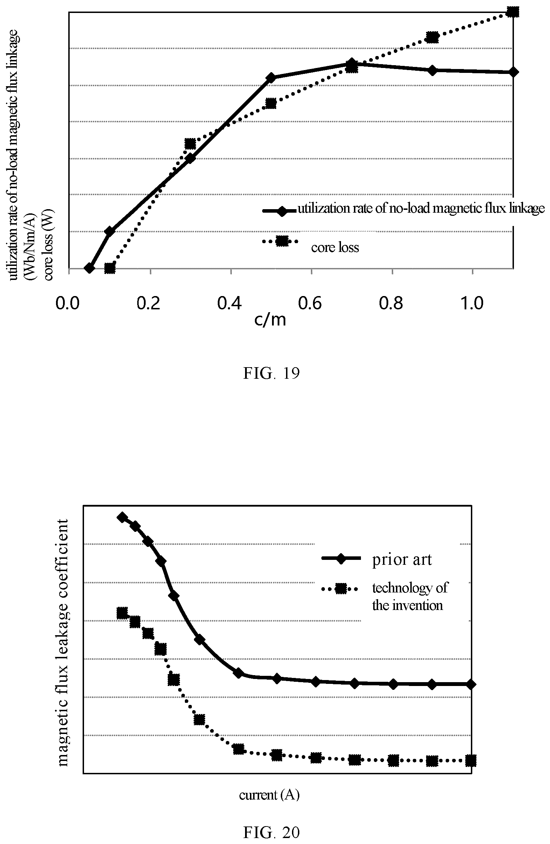

By defining the relationship between $c$ and $m$, on one hand, the case in which the magnetic flux density of the first rotor core 1 will be overly saturated due to a too small thickness thereof, thus reducing the utilization rate of the no-load magnetic flux linkage and lowering the motor's output, will not occur. On the other hand, a portion of the first rotor core 1, which generates the core loss, can be minimized, thereby reducing the motor loss. FIG. 19 shows curves of the no-load magnetic flux linkage utilization rate of the motor and the core loss varying with $c/m$.

When $c/m$ is less than 0.1, the no-load magnetic flux linkage utilization rate is relatively low. When $c/m$ is greater than 1, the core loss increases significantly. For $c/m$ in a range from 0.1 to 1, the no-load magnetic flux linkage utilization rate increases and then gradually stabilizes, while an increase trend of the core loss shows signs of slowing down. For $c/m$ in a range from 0.1 to 0.5, the no-load magnetic flux linkage utilization rate increases substantially linearly.

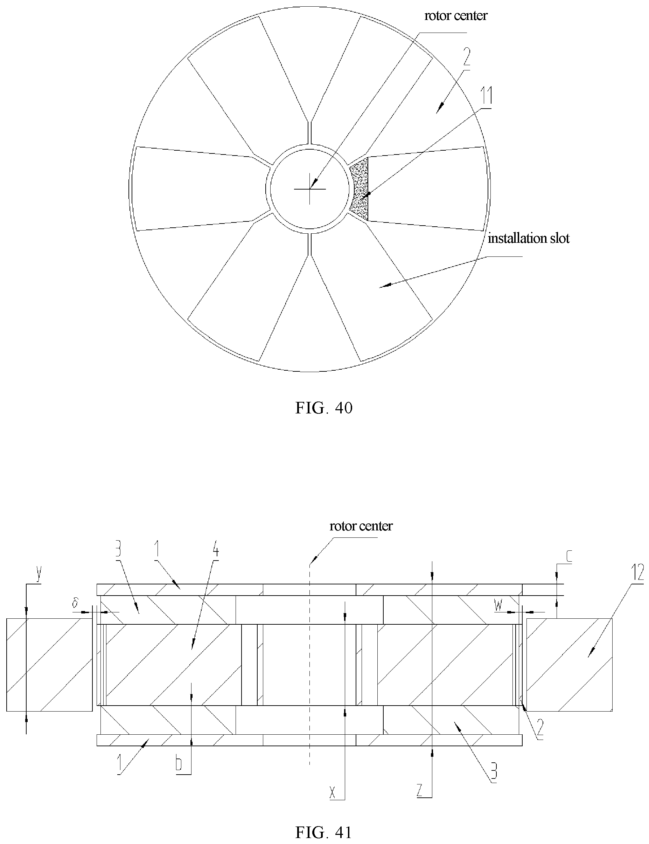

As shown in FIG. 40, in some embodiments, a flux barrier slot 11 is disposed on a side of the installation slot adjacent to the central axis of the second rotor core 2. The projection is thrown onto the end face of the second rotor core 2 along the axial direction of the second rotor core 2, and in the projection plane, the first permanent magnet 3 is adapted to allow a projection thereof to cover part of a projection of the flux barrier slot 11, that is, the projection of the first permanent magnet 3 and the projection of the flux barrier slot 11 partially overlap.

In some embodiments, an area of the projection of the flux barrier slot 11 covered by the projection of the first permanent magnet 3 is less than or equal to 75% of a total projection area of the flux barrier slot 11.

In further embodiments, the area of the projection of the flux barrier slot 11 covered by the projection of the first permanent magnet 3 is less than or equal to 25% of a total projection area of the flux barrier slot 11.

By defining the projection relationship between the first permanent magnet 3 and the flux barrier slot 11, on one hand, the saturation effect of the second rotor core 2 caused by the first permanent magnet 3 can be reduced, and on the other hand, the utilization rate of the first permanent magnet. Specifically, since only part of reinforcing ribs around the flux barrier slot 11 are magnetic conductive structures, and if the first permanent magnet 3 covers the flux barrier slot 11 fully, then the saturation level of this partial region will be high due to a small magnetic conductive area thereof. From another aspect, since the magnetic circuit area for the first permanent magnet 3 covering this partial region is limited, some magnetic flux linkage generated by the first permanent magnet 3 becomes ineffective due to a lack of a magnetic circuit, thus causing a low utilization rate of the first permanent magnet.

FIG. 42 shows the no-load magnetic flux linkage and the utilization rate of the first permanent magnet under different coverage areas. Experimental verification shows that compared with those corresponding to a coverage area of 100%, the no-load magnetic flux linkage corresponding to a coverage area of 80% is reduced by only 2.3%, and the cost of the first permanent magnet corresponding to the coverage area of 80% is reduced by 8.9%. Compared with those corresponding to the coverage area of 100%, the no-load magnetic flux linkage corresponding to a coverage area of 70% is reduced by only 6.2%, and the cost of the first permanent magnet corresponding to the coverage area of 70% is reduced by 14.8%. Compared with those corresponding to the coverage area of 100%, the no-load magnetic flux linkage corresponding to a coverage area of 20% is reduced by only 7.8%, and the cost of the first permanent magnet corresponding to the coverage area of 20% is reduced by 20.8%. The disclosure prefers a coverage area that slightly weakens the no-load magnetic flux linkage but significantly reduces the cost of the permanent magnets. If a high efficiency of the motor is considered, other coverage areas provided in the disclosure may also be selected.

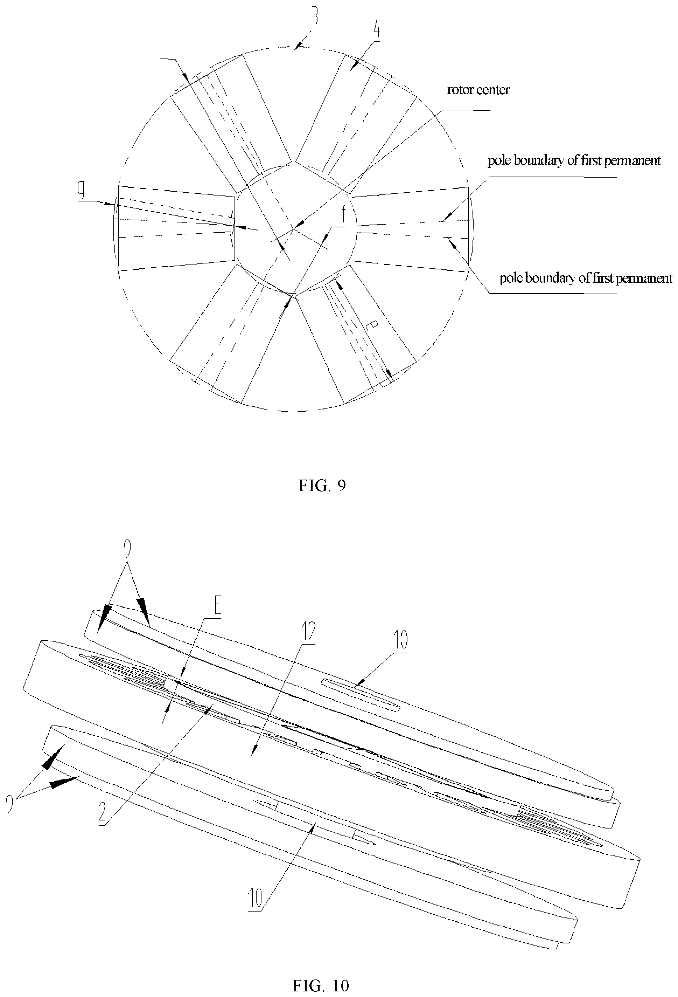

As shown in FIG. 9, in some embodiments, the projection is thrown onto the end face of the second rotor core 2 along the axial direction of the second rotor core 2, and in the projection plane, $min(e)$ denotes the minimum radial width e of the first permanent magnet 3, and $max(g)$ denotes the maximum radial width g of the second permanent magnet 4, and it is satisfied that $0.5 \leq min(e)/max(g) \leq 2$.

In some embodiments, $0.6 \leq min(e)/max(g) \leq 1.6$.

In some embodiments, $0.8 \leq min(e)/max(g) \leq 1.6$.

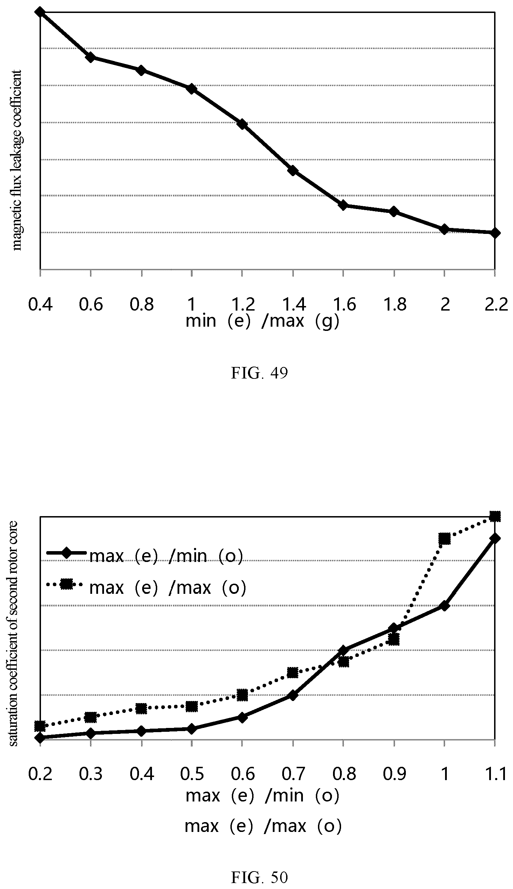

By defining the relationship between the radial widths of the first permanent magnet 3 and the second permanent magnet 4, the rotor magnetic flux leakage may be reduced, thus improving the motor's output and efficiency. Specifically, by defining a range of $min(e)/max(g)$, it is ensured that the second permanent magnet 4 is located within the effective range of the magnetic field lines of the first permanent magnet 3, thus reducing the rotor magnetic flux leakage. FIG. 49 shows a curve of the magnetic flux leakage coefficient of the motor varying with $min(e)/max(g)$. When $min(e)/max(g)$ is less than 0.5, the magnetic flux leakage coefficient is large due to a large magnetic flux leakage of the second permanent magnet 4. When $min(e)/max(g)$ is greater than 2, the effect of mutual squeezing of the magnetic field lines of the first permanent magnet 3 and second permanent magnet 4 is optimal, and there is substantially no change in the magnetic flux leakage coefficient. When $min(e)/max(g)$ is in a range from 0.5 to 2, the magnetic flux leakage coefficient decreases as the ratio $min(e)/max(g)$ increases, and a decrease rate is relatively large when the ratio $min(e)/max(g)$ is in a range from 0.6 to 1.6.

In some embodiments, $max(o)$ denotes the maximum radial width o of the second rotor core 2, and it is satisfied that $max(e) \leq max(o)$.

In some embodiments, $0.3 \leq max(e)/min(o) \leq 1$.

In some embodiments, $0.4 \leq max(e)/max(o) \leq 0.95$.

By defining the relationship between the radial widths of the first permanent magnet 3 and the second rotor core 2, an appropriate ratio of the magnetic supply area of the first permanent magnet 3 to a magnetic circuit sectional area thereof can be achieved, thus reducing the saturation level of the second rotor core 2, lowering the core loss of the second rotor core 2, and improving the motor efficiency. FIG. 50 shows curves of the saturation coefficient of the second rotor core varying with $max(e)/min(o)$ and $max(e)/max(o)$, respectively. When $max(e)/min(o)$ is less than 0.3 or $max(e)/max(o)$ is less than 0.4, the saturation coefficient of the second rotor core is low and has no change substantially, thus causing a low magnetic flux density of the motor and affecting the motor's output. When $max(e)/min(o)$ is greater than 1 or $max(e)/max(o)$ is greater than 0.95, an increase rate of the saturation coefficient of the second rotor core increases, the core loss thereof increases and the performance thereof degrades.

In some embodiments, $l$ denotes a radial width of the first rotor core 1, and it is satisfied that $0.7 \leq min(l)/max(e) \leq 3$.

In some embodiments, $1 \leq min(l)/max(e) \leq 2$.

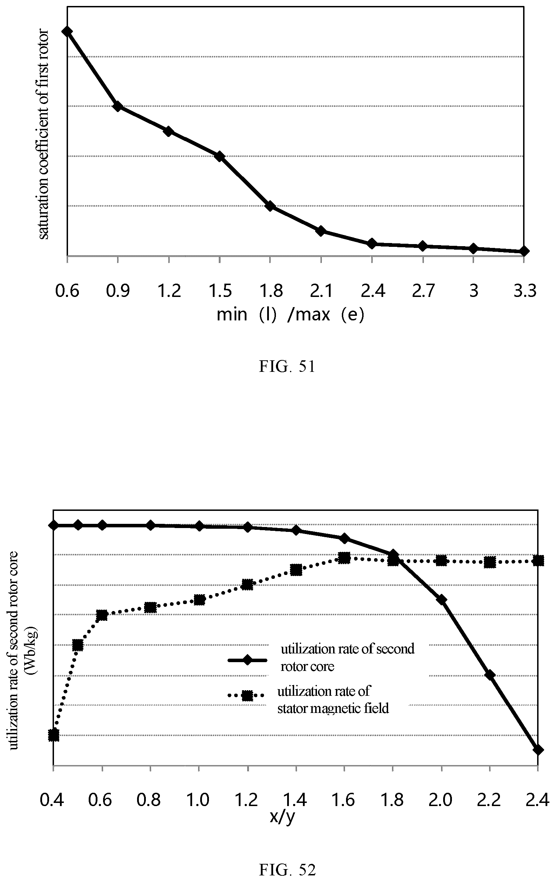

By defining the relationship between the radial widths of the first permanent magnet 3 and the first rotor core 1, an appropriate ratio of the magnetic supply area of the first permanent magnet 3 to a magnetic circuit sectional area thereof can be achieved, thus reducing the saturation level of the first rotor core 1, lowering the core loss of the first rotor core 1, and improving the motor efficiency. FIG. 51 shows a curve of the saturation coefficient of the first rotor core varying with $min(l)/max(e)$. When $min(l)/max(e)$ is less than 0.7, the saturation coefficient of the first rotor core is high, and the core loss is high. When $min(l)/max(e)$ is greater than 3, the saturation coefficient of the first rotor core has no change substantially. When $min(l)/max(e)$ is in a range from 0.7 to 3, the saturation coefficient of the first permanent magnet 3 decreases as the ratio $min(l)/max(e)$ increases, and has a relatively large decrease rate when $min(l)/max(e)$ in a range from 1 to 2.

As shown in FIGS. 38 and 46, in some embodiments, the projection is thrown onto the end face of the second rotor core 2 along the axial direction of the second rotor core 2, and in the projection plane, the area of a pole of the first permanent magnet 3 is s1, and an axial height of the second rotor core 2 along a central axis thereof is $x$, where s1 is negatively correlated with $x$.

In some embodiments, $s1 = -B \times x + D$, where $B$ is in a range from 25 to 100, and $D$ is in a range from 400 to 1600.

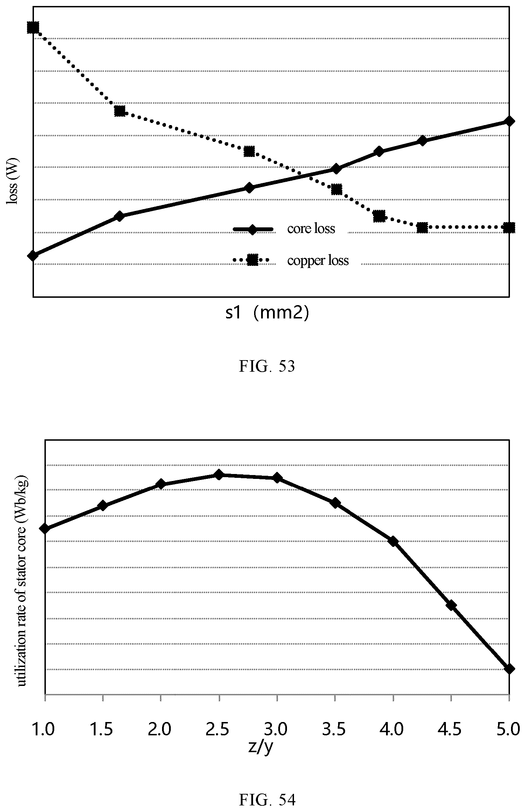

By defining the relationship between s1 and $x$, an appropriate ratio between the first permanent magnet 3 and the second rotor core 2 can be achieved, thereby improving the utilization rates of the first permanent magnet 3 and the second rotor core 2 while reducing the copper loss and the core loss of the motor. Specifically, s1 represents the magnetic supply area of a pole of the first permanent magnet 3, and it determines the strength of the axial magnetic field. While $x$ determines the strength of the tangential or radial magnetic field. When s1 is relatively large, the axial magnetic field is relatively strong, and the motor can obtain an optimal saturation level under a relatively small tangential or radial magnetic field, and vice versa. As s1 or $x$ further increases, the axial or tangential or radial magnetic field is strengthened, but the motor is already saturated, therefore, the reduction in the copper loss is relatively small, and the increase in the core loss is relatively large, and the utilization rates of the first permanent magnet 3 and the second rotor core 2 reduces, thus causing not only a decrease in the motor performance but also a waste of material. Therefore, s1 is negatively correlated with $x$. Additionally, by further defining the relationship between s1 and $x$, the copper loss and the core loss of the motor can be balanced under different ratios of the axial magnetic field to the tangential magnetic field, thereby enhancing the performance. FIG. 53 shows curves of the losses of the motor varying with s1 under a specific $x$. As s1 increases, the magnetic flux linkage provided by the first permanent magnet 3 increases, and the copper loss reduces, and when the motor is saturated, there is no change in the copper loss substantially. As s1 increases, the saturation level of the motor increases, and the core loss increases. The optimal ratio of s1 to $x$ occurs when the copper loss and the core loss are balanced.

In some embodiments, diameters of the first permanent magnets 3 disposed at two ends of the second rotor core 2 are the same. Such a configuration ensures that the magnetic field lines of the first permanent magnets 3 at two end faces of the second rotor core 2 form a closed circuit, thus increasing the magnetic flux of the motor, and additionally, ensuring that the axial forces at two ends of the rotor are balanced.

In some embodiments, the number of pole pairs of the first permanent magnet 3 is $q$, and the number of pole pairs of the second rotor core 2 is $p$, and it is satisfied that $q \leq p$. In some embodiments, $q = p$. By defining the relationship between $q$ and $p$, an output torque of the motor is enhanced under the condition that the utilization rate of the first permanent magnet is maximized.

In some embodiments, the projection is thrown onto the end face of the second rotor core 2 along the axial direction of the second rotor core 2, and in the projection plane, the edge of the first permanent magnet 3 located on its side adjacent to the rotor outer circle is an arc and/or a straight line, and/or an edge of the first permanent magnet 3 adjacent to the central axis of the second rotor core 2 is an arc and/or a straight line. On one hand, the shape of the first permanent magnet 3 can be flexibly selected based on the space at the rotor end face, thereby simplifying the rotor structure, and on the other hand, the shape of the first permanent magnet 3 can be configured according to processing requirements, thereby reducing processing costs.

In some embodiments, a balancing structure is disposed on the first rotor core 1 to adjust a dynamic balance of the motor, and has a shape and a material not limited herein.

As shown in FIG. 41, according to an embodiment of the disclosure, the motor includes the rotor structure described above.

The motor further includes a stator structure, which is disposed on the radial outer side of the rotor structure.

In some embodiments, the stator structure includes a stator core 12, and an outer diameter of the first permanent magnet 3 disposed at at least one end of the second rotor core 2 is less than the inner diameter of the stator core 12.

In some embodiments, the outer diameter of the first permanent magnet 3 disposed at least at one end of the second rotor core 2 is less than the larger one of the outer diameters of the first rotor core 1 and second rotor core 2.

Such a configuration ensures that the first permanent magnet 3 is in contact with the second rotor core 2 as much as possible, thereby improving the utilization rate of the first permanent magnet 3.

As shown in FIG. 10, in some embodiments, the motor includes a cover plate 9 and a rotary shaft 10. At least one end of the rotary shaft 10 is provided with the cover plate 9, and the minimum diameter of the outer circle of the cover plate 9 is greater than the inner diameter of the stator core 12. In the axial direction of the second rotor core 2, the distance between the cover plate 9 and the stator core 12 is $E$, and it is satisfied that $1.2y \leq E \leq 2.3y$.

The cover plate 9 may be a combined structure of the first rotor core 1 and the first permanent magnet 3, or another structure with axial magnetic flux properties. The cover plate 9 is installed on at least one end of the rotary shaft, and the axial magnetic flux generated by the cover plate 9 directly acts on the end faces of the stator core 12 and second rotor core 2, thereby improving the utilization rate of the cores. Moreover, the winding end portions on the end face of the stator core 12 can be effectively utilized, thereby improving the utilization rate of the windings. By defining the axial distance between the cover plate 9 and the stator core 12, the loss of the axial magnetic flux during a circulation can be reduced, thereby enhancing the utilization rate of the cover plate 9. High utilization rates of the materials of the core, windings, and cover plate enable the motor to achieve a high torque density.

In some embodiments, the stator structure is sleeved around the rotor structure, and an air gap is formed between the stator structure and the rotor structure. $w$ represents a difference between the maximum outer diameter of the second rotor core 2 and the maximum outer diameter of the first permanent magnet 3 of the rotor structure, and it is satisfied that $w \geq 0$.

In some embodiments, a thickness of the air gap is $\delta$, and it is satisfied that $0.5 \times min(\delta) \leq w \leq 14 \times min(\delta)$. Through this limitation, the magnetic field lines generated by the permanent magnets can enter the air gap to become effective magnetic field lines while ensuring the saturation of the air gap, thereby improving the output torque of the motor.

In some embodiments, the stator structure includes the stator core 12, and the stator core 12 is sleeved around the second rotor core 2 of the rotor structure.

In some embodiments, $x$ represents an axial height of the second rotor core 2 along the axial direction of the motor, and $y$ represents an axial height of the stator core 12 along the axial direction of the motor, and it is satisfied that $x/y \leq 2$.

In some embodiments, $0.5 \leq x/y \leq 1.5$.

In FIG. 41, $x$ represents the axial length of the second rotor core 2, $y$ represents the axial length of the stator core 12, and $z$ represents the total axial length of the rotor structure of the motor.

By defining a height ratio between the second rotor core 2 and the stator core 12, the utilization rates of the second rotor core 2 and the stator magnetic field can be enhanced, thus reducing the motor costs. Moreover, the core loss of the stator core 12 can be reduced, and the motor efficiency is enhanced. FIG. 52 shows curves of the utilization rate of the second rotor core and the utilization rate of the stator magnetic field varying with $x/y$. When $x/y$ is greater than 1.5, a decrease rate of the utilization rate of the second rotor core begins to increase. When $x/y$ is less than 0.5, a decrease rate of the utilization rate of the stator magnetic field increases. When $x/y$ is greater than 2, the second rotor core 2 is higher than the stator core 12 too much, thus disabling some rotor magnetic field lines to enter the stator, and resulting in a sharp decline in the utilization rate of the rotor core.

In some embodiments, $z$ represents the total axial height of the rotor structure along the axial direction of the motor, and $y$ represents the axial height of the stator core 12 along the axial direction of the motor, and it is satisfied that $z/y \leq 4$.

In some embodiments, $1.0 \leq z/y \leq 3.0$.

By defining the height ratio of the stator core 12 and the rotor structure, the utilization rate of the stator core 12 can be enhanced, thereby reducing the motor costs. Additionally, part of the volume of the stator that generates the core loss can be reduced, thereby lowering the core loss. FIG. 54 shows a curve of the utilization rate of the stator core varying with $z/y$. As $z/y$ increases, the utilization rate of the stator core first increases and then decreases. When $z/y$ is greater than 4, the stacking height ratio between the rotor and the stator core exceeds the optimal ratio too much, causing a decrease rate of the utilization rate of the stator core to increase. For $z/y$ in a range from 1 to 3, the utilization rate of the stator core is relatively high.

In some embodiments, $x$ represents the axial height of the second rotor core 2 along the axial direction of the motor, $y$ represents the axial height of the stator core 12 along the axial direction of the motor, and $b$ represents the axial height of the first permanent magnet 3 along the axial direction of the motor, and it is satisfied that $0.01x \leq b \leq 0.7x$, and/or $0.015y \leq b \leq 0.9y$.

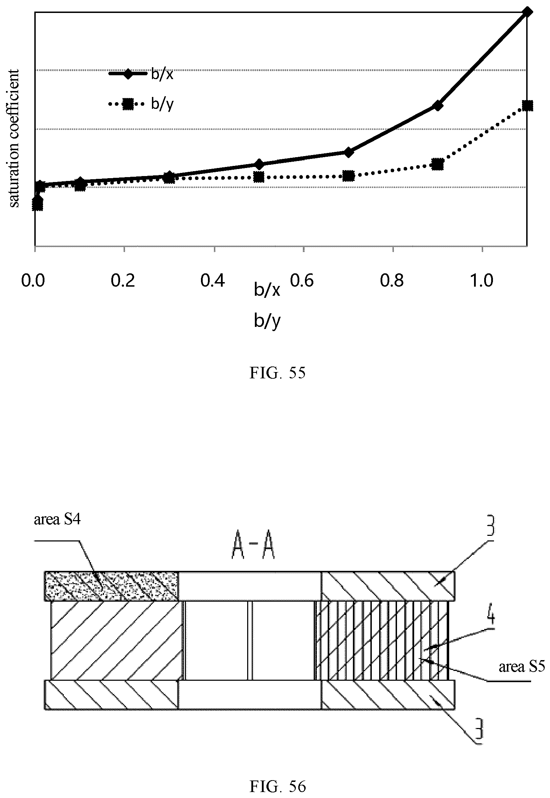

By defining the relationship between the thickness of the first permanent magnet 3 and the height of the stator core 12 or the height of the rotor core, the saturation level of the stator and rotor cores caused by the magnetic field lines of the first permanent magnet 3 can be reduced, thus lowering the core loss of the motor. FIG. 55 shows curves of the saturation coefficient of the motor varying with *b/x* and *b/y,* respectively. As *b/x* and *b/y* increase, the saturation coefficient of the motor increases. When *b/x* is less than 0.01 or when *b/y* is less than 0.015, the saturation coefficient of the motor is too low, thus affecting the motor's output. When *b/x* is greater than 0.7 or when *b/y* is greater than 0.9, the saturation coefficient of the motor increases sharply due to the increase of the saturation caused by the magnetic field lines of the first permanent magnet.

It should be noted that the terminologies used herein are for describing specific embodiments but not intended to limit the exemplary embodiments of this application. As used herein, unless the context clearly indicates, otherwise a singular form is intended to include a plural form. Additionally, it should be understood that when the terms "comprise" and/or "include" are used in this specification, they indicate the presence of features, steps, operations, devices, components, and/or combinations thereof.

It should be noted that the terms "first" and "second" etc., in the specification and claims of this application and the drawings are used to distinguish similar objects and do not necessarily imply a specific order or sequence. It should be understood that such data may be interchanged under appropriate circumstances so that the embodiments of this application described herein can be implemented in orders other than those illustrated or described herein.

The above descriptions are merely preferred embodiments of the disclosure but not intended to limit the disclosure. For those skilled in the art, various modifications and variations can be made to the disclosure. Any modifications, equivalent replacements, improvements, etc., made within the spirit and principles of the disclosure shall be included within the scope of the disclosure.

**Claims**

1. A rotor structure, **characterized by** comprising:

   a first rotor core (1);
   a second rotor core (2) provided with a plurality of installation slots spaced circumferentially;
   a first permanent magnet (3) axially magnetized and comprising a first polarity (5) and a second polarity (6); and
   a plurality of second permanent magnets (4), comprising a third polarity (7) and a fourth polarity (8), wherein the plurality of second permanent magnets (4) are installed in the plurality of installation slots in a one-to-one correspondence;

   wherein each of two axial ends of the second rotor core (2) is provided with one first permanent magnet (3), and one first rotor core (1) is disposed on a side of each first permanent magnet (3) away from the second rotor core (2) in an axial direction;
   a projection is thrown onto an end face of the second rotor core (2) along the axial direction, and in a projection plane, a polarity arrangement sequence of each first permanent magnet (3) and the plurality of second permanent magnets (4) is the first polarity (5), the third polarity (7), the second polarity (6), and the fourth polarity (8) arranged counterclockwise; the first polarity (5) and third polarity (7) are the same, and the second polarity (6) and fourth polarity (8) are the same.

2. The rotor structure according to claim 1, wherein each first permanent magnet (3) is divided into multiple magnetization regions along a circumferential direction, and magnetization directions of two adjacent magnetization regions are opposite to each other; in the projection plane along the axial direction, two circumferential sides of each magnetization region partially overlap with two adjacent second permanent magnets (4), respectively;

   magnetization directions of the two adjacent second permanent magnets (4) are opposite; each magnetization region and the two adjacent second permanent magnets (4) thereof form a magnetic field region; and polarities of sides of each magnetization region facing the magnetic field region are the same as polarities of sides of the two adjacent second permanent magnets (4) facing the magnetic field region respectively; optionally, a first circumferential side of each magnetization region of each first permanent magnet (3) covers a same polarity region of one adjacent second permanent magnets (4), and a second circumferential side of the corresponding magnetization region covers a same polarity region of another adjacent second permanent magnets (4).

3. The rotor structure according to claim 1 or 2, wherein the projection is thrown onto the end face of the second rotor core (2) along the axial direction, and in the projection plane, an angle of deflection between a geometric centerline of at least one pole pair of each first permanent magnet (3) and a centerline of a corresponding rotor magnetic field of the second rotor core (2) is less than or equal to 5°; optionally, the geometric centerline of the at least one pole pair of each first permanent magnet (3) coincides with the centerline of the corresponding rotor magnetic field of the second rotor core (2).

**4.** The rotor structure according to any one of claims 1 to 3, wherein:

the projection is thrown onto the end face of the second rotor core (2) along the axial direction, and in the projection plane, $\alpha$ represents an angle between lines connecting respective two end-points of a pole of each first permanent magnet (3) located on a side adjacent to a rotor outer circle and a center of the second rotor core (2); $\beta$ represents an angle between lines connecting respective two end-points of a magnetic conductive portion of a pole of the second rotor core (2) located on its side adjacent to the rotor outer circle and the center of the second rotor core (2); and it is satisfied that $\alpha/\beta \geq 1$; optionally, $1 < \alpha/\beta \leq 1.62$; and/or

the projection is thrown onto the end face of the second rotor core (2) along the axial direction, and in the projection plane, $\alpha$ represents the angle between the lines connecting respective two end-points of the pole of each first permanent magnet (3) located on a side adjacent to a rotor outer circle and the center of the second rotor core (2); and $\gamma$ represents an angle between lines connecting respective two end-points of a pole of the plurality of second permanent magnets (4) located on a side adjacent to the rotor outer circle and the center of the second rotor core (2), and it is satisfied that $\alpha/\gamma > 1$; optionally, $2.0 \leq \alpha/\gamma \leq 3.3$.

**5.** The rotor structure according to any one of claims 1 to 4, wherein the projection is thrown onto the end face of the second rotor core (2) along the axial direction, and in the projection plane, $\alpha$ represents an angle between lines connecting respective two end-points of a pole of each first permanent magnet (3) located on a side adjacent to a rotor outer circle and a center of the second rotor core (2); a pole arc angle of a pole of the second rotor core (2) is 360/2$p$; and it satisfied that $360/2p/\alpha \geq 1$, wherein $p$ represents the number of pole pairs of the second rotor core (2); optionally, $1.3 \geq 360/2p/\alpha \geq 1$.

**6.** The rotor structure according to any one of claims 1 to 5, wherein:

the projection is thrown onto the end face of the second rotor core (2) along the axial direction, and in the projection plane, an area of a pole of each first permanent magnet (3) is $s1$, and an area of a pole of the second rotor core (2) is $s2$, and it is satisfied that $s1/s2 \geq 1$; optionally, $1.05 \leq s1/s2 \leq 1.95$; and/or
the projection is thrown onto the end face of the second rotor core (2) along the axial direction, and in the projection plane, an area of a pole of each first permanent magnet (3) is $s1$, and an area of a pole of the plurality of second permanent magnets (4) is $s3$; and in a section passing through a central axis of the second rotor core (2), an area of a pole of the first permanent magnet (3) is s4, and an area of a pole of the plurality of second permanent magnets (4) is $s5$, wherein $0.8 \times s3 \leq s1 \leq 2.4 \times s5$, and/or $0.3 \times s3 \leq s4 \leq 0.8 \times s5$; and/or
the projection is thrown onto the end face of the second rotor core (2) along the axial direction, and in the projection plane, an area of a pole of each first permanent magnet (3) is $s1$, and a length of a line connecting a central axis of the second rotor core (2) and any point on an outer circle is $j$, and it is satisfied

$$1 \leq \frac{s1}{max(j)} \leq 20$$ ; optionally, $3 \leq s1/max$

$(j) \leq 16$; and/or
the projection is thrown onto the end face of the second rotor core (2) along the axial direction, and in the projection plane, an area of a pole of each first permanent magnet (3) is s1, and an area of a pole of the second rotor core (2) is $s2$, and an area of a pole of the plurality of second permanent magnets (4) is $s3$, and it is satisfied that $0.2 \leq s2/(s1 + s3) \leq 1$; optionally, $0.3 \leq s2/(s1 + s3) \leq 0.6$; and/or
the projection is thrown onto the end face of the second rotor core (2) along the axial direction, and in the projection plane, an area of a pole of each first permanent magnet (3) is $s1$, and a thickness of each first permanent magnet (3) along the axial direction of the second rotor core (2) is $b$, and $s1$ is negatively correlated with $b$ ; optionally, a relationship between s1 and $b$ satisfies a dimensionless formula $s1 = -A \times b + C$, wherein $A$ is in a range from 5 to 20, and $C$ is in a range from 120 to 400.

**7.** The rotor structure according to any one of claims 1 to 6, wherein:

the projection is thrown onto the end face of the second rotor core (2) along the axial direction, and in the projection plane, a sum of angles, each of which is formed between lines connecting a center of the second rotor core (2) and two end-points of each pole of each first permanent magnet (3) located on a side adjacent to a rotor outer circle respectively, is $\alpha \times 2q$, and a ratio of the sum of the angles to an angle of a full circle of the second rotor core (2) is a, and a = $\alpha \times 2q/360$; a thickness of each first permanent magnet (3) along the axial direction of the second rotor core (2) is $b$, , and it is satisfied that $2 \leq b/a \leq 6$, wherein $q$ represents the number of pole pairs of the first permanent magnet (3); and/or the projection is thrown onto the end face of the second rotor core (2) along the axial direction, and in the projection plane, a sum of angles, each of which is formed between lines connecting a center of the second rotor core (2) and two end-points of each pole of each first permanent magnet (3) located on a side adjacent to a rotor outer circle respectively, is $\alpha \times 2q$, and a ratio of the sum of the angles to an angle of a full circle of the second rotor core (2) is a, and a = $\alpha \times 2q/360$; a thickness of each first permanent magnet (3) along the axial direction of the second rotor core (2) is $b$, and it is satisfied that $1.7 \leq a \times b \leq 12$, wherein $q$ represents the number of pole pairs of each first permanent magnet (3); optionally, $2 \leq a \times b \leq 10$ .

8. The rotor structure according to any one of claims 1 to 7, wherein:

   a thickness of each first permanent magnet (3) along the axial direction is $b$, and a thickness of each second permanent magnet (4) along a magnetization direction thereof is $m$, and it is satisfied that $0.2 \leq b/m \leq 2$; optionally, $0.4 \leq b/m \leq 1.4$; and/or
   a thickness of each first permanent magnet (3) along the axial direction is $b$, and a thickness of the first rotor core (1) along the axial direction of the second rotor core (2) is $c$, wherein a value of $c$ is not less than an axial thickness of a single core lamination of the second rotor core, and it is satisfied that $0.1 \leq c/b \leq 1$.

9. The rotor structure according to any one of claims 1 to 8, wherein a flux barrier slot (11) is disposed on a side of each installation slot adjacent to a central axis of the second rotor core (2); the projection is thrown onto the end face of the second rotor core (2) along the axial direction of the second rotor core (2), and in the projection plane, each first permanent magnet (3) is adapted to allow a projection thereof to cover part of a projection of the corresponding flux barrier slot (11);

   optionally, an area of the projection of the corresponding flux barrier slot (11) covered by the projection of each first permanent magnet (3) is less than or equal to 75% of a total projection area of the corresponding flux barrier slot (11); optionally, the area of the projection of the corresponding flux barrier slot (11) covered by the projection of each first permanent magnet (3) is less than or equal to 25% of the total projection area of the corresponding flux barrier slot (11).

10. The rotor structure according to any one of claims 1 to 9, wherein the projection is thrown onto the end face of the second rotor core (2) along the axial direction, and in the projection plane, i denotes a length of a line connecting a central axis of the second rotor core (2) and a midpoint of an end-edge of a pole of each first permanent magnet (3) located on a side adjacent to a rotor outer circle, and the maximum length of a line connecting the central axis of the second rotor core (2) and any point on the rotor outer circle of the second rotor core (2) is $max(j)$, and it is satisfied that $max(i) \leq max(j)$;

   optionally, the projection is thrown onto the end face of the second rotor core (2) along the axial direction, and in the projection plane, $ii$ denotes a length of a line connecting the central axis of the second rotor core (2) and a midpoint of an end-edge of a pole of each second permanent magnet (4) located on a side adjacent to the rotor outer circle, and it is satisfied that $max(j) \geq max(i) \geq 0.8 \times ii$;
   optionally, $max(j) \geq max(i) \geq 0.95 \times ii$.

11. The rotor structure according to any one of claims 1 to 10, wherein the projection is thrown onto the end face of the second rotor core (2) along the axial direction, and in the projection plane, $d$ denotes a length of a line connecting a central axis of the second rotor core (2) and a midpoint of a radial inner edge of a pole of each first permanent magnet (3), and $i$ denotes a length of a line connecting a central axis of the second rotor core (2) and a midpoint of an end-edge of a pole of each first permanent magnet (3) located on a side adjacent to a rotor outer circle, and it is satisfied that $0.2 \leq d/max(i) \leq 0.8$; optionally, $0.3 \leq d/max(i) \leq 0.6$; and/or
   the projection is thrown onto the end face of the second rotor core (2) along the axial direction, and in the projection plane, $d$ denotes a length of a line connecting a central axis of the second rotor core (2) and a midpoint of a radial inner edge of a pole of each first permanent magnet (3), and $f$ denotes a length of a line connecting the central axis of the second rotor core (2) and a midpoint of a radial inner edge of a pole of the second permanent magnet (4), and it is satisfied that $0 \leq d/f \leq 2$; optionally, $0.8 \leq d/f \leq 1.6$.

12. The rotor structure according to any one of claims 1 to 11, wherein the projection is thrown onto the end face of the second rotor core (2) along the axial direction, and in the projection plane, $i$ denotes a length of a line connecting a central axis of the second rotor core (2) and a midpoint of an end-edge of a pole of each first permanent magnet (3) located on a side adjacent to a rotor outer circle, and $j$ denotes a length of a line connecting the central axis of the second rotor core (2) and any point on the rotor outer circle of the second rotor core (2), and $h$ denotes a length of a line connecting the central axis of the second rotor core (2) and any point on a rotor outer circle of the first rotor core (1), and it is satisfied that $max(h) \leq max(j)$, and/or $min(h) \geq 0.8 \times max(i)$; optionally, $0.9 \leq min(h)/max(i) \leq 1.4$.

13. The rotor structure according to any one of claims 1 to 12, wherein the projection is thrown onto the end face of the second rotor core (2) along the axial direction, and in the projection plane, $d$ denotes a length of a line connecting a central axis of the second rotor core (2) and a midpoint of a radial inner edge of a pole of each first permanent magnet (3), and $k$ denotes a length of a line connecting the central axis of the second rotor core (2) and any point on a radial inner edge of the first rotor core (1), and it is satisfied that $max(k) \leq d$; optionally, $0.2 \leq max(k)/d \leq 1$.

14. The rotor structure according to any one of claims 1 to 13, wherein:

the projection is thrown onto the end face of the second rotor core (2) along the axial direction, and in the projection plane, $min(e)$ denotes the minimum radial width e of each first permanent magnet (3), and $max(g)$ denotes the maximum radial width g of each second permanent magnet (4), and it is satisfied that $0.5 \leq min(e)/max(g) \leq 2$; optionally, $0.6 \leq min(e)/max(g) \leq 1.6$; and/or the projection is thrown onto the end face of the second rotor core (2) along the axial direction, and in the projection plane, $max(e)$ denotes the maximum radial width e of each first permanent magnet (3), and $max(o)$ denotes the maximum radial width o of the second rotor core (2), and it is satisfied that $max(e) \leq max(o)$; optionally, $0.3 \leq max(e)/min(o) \leq 1$, and/or, $0.4 \leq max(e)/max(o) \leq 0.95$; and/or the projection is thrown onto the end face of the second rotor core (2) along the axial direction, and in the projection plane, $max(e)$ denotes the maximum radial width e of each first permanent magnet (3), and $min(l)$ denotes the minimum radial width l of the first rotor core (1), and it is satisfied that $0.7 \leq min(l)/max(e) \leq 3$; optionally, $1 \leq min(l)/max(e) \leq 2$.

15. The rotor structure according to any one of claims 1 to 14, wherein:

the projection is thrown onto the end face of the second rotor core (2) along the axial direction, and in the projection plane, and an area of a pole of each first permanent magnet (3) is $s1$, and an axial height of the second rotor core (2) along a central axis thereof is $x$, wherein $s1$ is negatively correlated with $x$; optionally, $s1 = -B \times x + D$,

wherein $B$ is in a range from 25 to 100, and $D$ is in a range from 400 to 1600; and/or a thickness of the first rotor core (1) along an axial direction of the second rotor core (2) is $c$, and a thickness of each second permanent magnet (4) along a magnetization direction thereof is $m$, and it is satisfied that $0.1 \times m \leq c \leq m$; optionally, $0.1 \times m \leq c \leq 0.5 \times m$.

16. A motor, comprising a stator structure and the rotor structure according to any one of claims 1 to 15, wherein the stator structure is sleeved around the rotor structure.

17. The motor according to claim 16, wherein:

the stator structure comprises a stator core (12), and an outer diameter of each first permanent magnet (3) disposed at at least one end of the second rotor core (2) is less than an inner diameter of the stator core (12); and/or an outer diameter of each first permanent magnet (3) disposed at at least one end of the second rotor core (2) is less than a larger one of an outer diameter of the first rotor core (1) and an outer diameter of the second rotor core (2).

18. The motor according to claim 16 or 17, wherein an air gap is formed between the stator structure and the rotor structure, $w$ represents a difference between the maximum outer diameter of the second rotor core (2) and the maximum outer diameter of the first permanent magnet (3) of the rotor structure, and it is satisfied that $w \geq 0$; optionally, a thickness of the air gap is $\delta$, and it is satisfied that $0.5 \times min(\delta) \leq w \leq 14 \times min(\delta)$.

19. The motor according to any one of claims 16 to 18, wherein:

the stator structure comprises a stator core (12); $x$ represents an axial height of the second rotor core (2) along the axial direction of the motor, and $y$ represents an axial height of the stator core (12) along the axial direction of the motor, and it is satisfied that $x/y \leq 2$; optionally, $0.5 \leq x/y \leq 1.5$; and/or the stator structure comprises a stator core (12); $z$ represents a total axial height of the rotor structure of the motor, and $y$ represents an axial height of the stator core (12) along the axial direction of the motor, and it is satisfied that $z/y \leq 4$; optionally, $1.0 \leq z/y \leq 3.0$.

20. The motor according to any one of claims 16 to 19, wherein the stator structure comprises a stator core (12); $x$ represents an axial height of the second rotor core (2) along the axial direction of the motor, and $y$

represents an axial height of the stator core (12) along the axial direction of the motor, and *b* represents an axial height of each first permanent magnet (3) along the axial direction of the motor, and it is satisfied that $0.01x \leq b \leq 0.7x$; and/or $0.015y \leq b \leq 0.9y$; and/or

the motor comprises a cover plate (9) and a rotary shaft (10); at least one end of the rotary shaft (10) is provided with one cover plate (9); and the minimum diameter of an outer circle of the cover plate (9) is greater than an inner diameter of the stator core (12); and in the axial direction, a distance between the cover plate (9) and the stator core (12) is *E*, and it is satisfied that $1.2y \leq E \leq 2.3y$.

FIG. 1

FIG. 2

FIG. 3

FIG. 4

pole boundary of
first permanent

**FIG. 5**

pole boundary of first permanent

pole boundary of first permanent

rotor magnetic field center

geometric center of first permanent

rotor center

**FIG. 6**

FIG. 7

pole boundary of first permanent

pole boundary of first permanent

rotor center

FIG. 8

pole boundary of first permanent

area S3

area S1

rotor center

area S2

FIG. 9

rotor center

pole boundary of first permanent

pole boundary of first permanent

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

time (ms)

FIG. 25

torque (Nm)

FIG. 26

FIG. 27

FIG. 28

FIG. 29

FIG. 30

FIG. 31

FIG. 32

FIG. 33

FIG. 34

FIG. 35

FIG. 36

FIG. 37

FIG. 38

FIG. 39

rotor center

2

11

installation slot

FIG. 40

rotor center

3 1 4

y

δ

1 b

x z

c

w

12

2

3

FIG. 41

FIG. 42

FIG. 43

FIG. 44

FIG. 45

FIG. 46

FIG. 47

FIG. 48

FIG. 49

FIG. 50

FIG. 51

FIG. 52

FIG. 53

FIG. 54

FIG. 55

FIG. 56

area S4

area S5

A - A

## INTERNATIONAL SEARCH REPORT

International application No.

**PCT/CN2023/109451**

### A. CLASSIFICATION OF SUBJECT MATTER

H02K 1/2713(2022.01)i

According to International Patent Classification (IPC) or to both national classification and IPC

### B. FIELDS SEARCHED

Minimum documentation searched (classification system followed by classification symbols)

IPC: H02K

Documentation searched other than minimum documentation to the extent that such documents are included in the fields searched

Electronic data base consulted during the international search (name of data base and, where practicable, search terms used)

VEN, CNTXT, WOTXT, EPTXT, USTXT, CNKI, IEEE: 转子, 铁芯, 铁心, 偏移, 永磁, 磁体, 磁钢, 充磁, 轴向, 极性, rotor, core, offset, permanent magnet, magnetiz+, axial, polar+

### C. DOCUMENTS CONSIDERED TO BE RELEVANT

| Category* | Citation of document, with indication, where appropriate, of the relevant passages | Relevant to claim No. |
|---|---|---|
| A | CN 212366952 U (EKONTROL VEHICLE TECHNOLOGY (SUZHOU) CO., LTD.) 15 January 2021 (2021-01-15)<br>description, paragraphs 0027-0034, and figures 1-2 | 1-20 |
| A | CN 115001172 A (NANJING UNIVERSITY OF SCIENCE AND TECHNOLOGY) 02 September 2022 (2022-09-02)<br>description, paragraphs 0033-0036, and figures 1-4 | 1-20 |
| A | CN 112994389 A (HOHAI UNIVERSITY) 18 June 2021 (2021-06-18)<br>entire document | 1-20 |
| A | CN 115085430 A (WUHU MIDEA SMART KITCHEN APPLIANCE MANUFACTURING CO., LTD.) 20 September 2022 (2022-09-20)<br>entire document | 1-20 |
| A | CN 207069853 U (JIANGSU HEHUI POWER TOOLS CO., LTD.) 02 March 2018 (2018-03-02)<br>entire document | 1-20 |
| A | DE 102013225238 A1 (ROBERT BOSCH GMBH) 11 June 2015 (2015-06-11)<br>entire document | 1-20 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 October 2023** | **18 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 611 220 A1**

## INTERNATIONAL SEARCH REPORT

<table>
<tr><td colspan="3">International application No.<br>**PCT/CN2023/109451**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | WO 2021026575 A1 (MIBA SINTER AUSTRIA GMBH) 18 February 2021 (2021-02-18)<br>entire document | 1-20 |

Form PCT/ISA/210 (second sheet) (July 2022)

**INTERNATIONAL SEARCH REPORT**
Information on patent family members

| | International application No. |
| --- | --- |
| | **PCT/CN2023/109451** |

| Patent document cited in search report | | | Publication date (day/month/year) | Patent family member(s) | | | Publication date (day/month/year) |
| --- | --- | --- | --- | --- | --- | --- | --- |
| CN | 212366952 | U | 15 January 2021 | None | | | |
| CN | 115001172 | A | 02 September 2022 | None | | | |
| CN | 112994389 | A | 18 June 2021 | None | | | |
| CN | 115085430 | A | 20 September 2022 | None | | | |
| CN | 207069853 | U | 02 March 2018 | None | | | |
| DE | 102013225238 | A1 | 11 June 2015 | CN | 104702004 | A | 10 June 2015 |
| | | | | IN | 201403513 | I1 | 13 November 2015 |
| WO | 2021026575 | A1 | 18 February 2021 | AT | 522826 | A1 | 15 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211510763